# EUROPEAN PATENT SPECIFICATION

(11) **EP 3 579 441 B1**
(45) Date of publication and mention of the grant of the patent: **29.10.2025**
(21) Application number: 18748612.1
(22) Date of filing: 30.01.2018
(51) Int. Cl.: H04B 7/06, H04B 7/08, H04W 72/04, H04W 16/28, H04W 74/00, H04W 76/19, H04W 74/0833

(54) **BEAM RECOVERY PROCESSING METHOD, NETWORK SIDE DEVICE AND MOBILE TERMINAL**
STRAHLWIEDERHERSTELLUNGVERARBEITUNGSVERFAHREN, NETZWERKSEITIGE VORRICHTUNG UND MOBILES ENDGERÄT
PROCÉDÉ DE TRAITEMENT DE RÉCUPÉRATION DE FAISCEAU, DISPOSITIF DE CÔTÉ RÉSEAU ET TERMINAL MOBILE

(30) Priority: 05.02.2017 CN 201710064761
(43) Date of publication of application: 11.12.2019
(73) Proprietor: Vivo Mobile Communication Co., Ltd., Dongguan, Guangdong 523860 (CN)
(72) Inventor: YANG, Yu, Dongguan Guangdong 523860 (CN); SONG, Yang, Dongguan Guangdong 523860 (CN); SUN, Xiaodong, Dongguan Guangdong 523860 (CN)
(74) Representative: Winter, Brandl - Partnerschaft mbB
(86) International application number: PCT/CN2018/074551
(87) International publication number: WO 2018/141238

(56) References cited:
- WO-A1-2016/086144
- WO-A1-2017/123079
- CN-A- 103 765 794
- CN-A- 103 875 191
- US-A1- 2015 257 073
- US-A1- 2016 353 510
- INTEL CORPORATION: "Discussion on beam recovery in NR", vol. RAN WG1, no. Reno, USA; 20161114 - 20161118, 13 November 2016 (2016-11-13), XP051175946, Retrieved from the Internet <URL:http://www.3gpp.org/ftp/Meetings_3GPP_SYNC/RAN1/Docs/> [retrieved on 20161113]
- CMCC: "Discussion on UE triggered beam reporting for beam recovery", vol. RAN WG1, no. Spokane, USA; 20170116 - 20170120, 16 January 2017 (2017-01-16), XP051207969, Retrieved from the Internet <URL:http://www.3gpp.org/ftp/Meetings_3GPP_SYNC/RAN1/Docs/> [retrieved on 20170116]
- SAMSUNG: "Discussion on UE initiated Beam Switching", vol. RAN WG1, no. Spokane, USA; 20170116 - 20170120, 16 January 2017 (2017-01-16), XP051208439, Retrieved from the Internet <URL:http://www.3gpp.org/ftp/Meetings_3GPP_SYNC/RAN1/Docs/> [retrieved on 20170116]

## Description

### CROSS-REFERENCE TO RELATED APPLICATION

This application claims a priority to Chinese Patent Application No. 201710064761.7 filed on February 5, 2017.

### TECHNICAL FIELD

The present disclosure relates to the field of communications, and in particular to a method for beam recovery processing, a network-side device, and a mobile terminal.

### BACKGROUND

In the research of a next-generation communication system after 4G, an operating frequency band supported by the system is raised to above 6 GHz, and up to about 100 GHz. A high-frequency band has a relatively rich idle frequency resource, which can provide greater throughput for data transmission. At present, modeling of high-frequency channels has been completed in 3GPP. A high-frequency signal has a short wavelength, compared with a low-frequency signal, more antenna elements can be arranged on a panel of a same size, and a high-frequency beam having better directivity and a narrower lobe is formed by using the beamforming technology. Therefore, combining large-scale antennas with high-frequency communications is also one of the future trends. However, the high-frequency beam for a large-scale antenna is narrow, and when the high-frequency beam is blocked, the communication link may be broken, affecting service transmission. In conventional solutions, after the high layer determines that the transmission quality of a radio link deteriorates, the high layer initiates RRC reestablishment, performs beam training to find an optimal beam, and recovers data transmission. Such a process has a long delay.

Prior art document D1 (INTEL CORPORATION: "Discussion on beam recovery in NR" 3GPP DRAFT; R1-1611982) discusses beam recovery in NR, where several proposals are arrived. Proposal 4: UE initiated beam reporting should take into account the measurement report for reference signal in beam management procedures P-1/P-2/P-3.

Prior art document D2 (CMCC: "Discussion on UE triggered beam reporting for beam recovery" 3GPP DRAFT; R1-1700436) discusses UE triggered beam reporting for beam recovery. Proposal 1: UE triggered beam recovery procedures should be supported in NR.

Prior art document D3 (US 2016/353510 A1) discloses apparatus and methods are provided to handle the intermittent disconnections in an MMW system. In an aspect, the beam tracking failure is determined upon detection of one or more tracking failure conditions.

Prior art document D4 (SAMSUNG: "Discussion on UE Initiated Beam Switching" 3GPP DRAFT; R1-1700923) discusses UE initiated beam switching. NR should support UE initiated beam recovery functionality and consider some aspects such as gNB configures a triggering condition.

### SUMMARY

Embodiments of the present disclosure provide a method for beam recovery processing, a network-side device, and a mobile terminal according to the appended claims, to solve the problem that beam recovery has a long delay.

In a first aspect, a method for beam recovery processing is provided according to an embodiment of the present disclosure, and includes:
transmitting, by a network-side device, a first indication message to a mobile terminal in response to that a preset trigger condition is met, where the first indication message is used to indicate a new beam pair link BPL, and the preset trigger condition includes that a beam recovery mechanism is determined to be initiated by the mobile terminal based on a measurement result of a downlink reference signal or a beam recovery mechanism is determined to be initiated by the network-side device based on a measurement result of an uplink reference signal; and
switching to the new BPL for data transmission, where the new BPL comprises BPLs corresponding to at least two transmission and reception points.

Before transmitting, by the network-side device, the first indication message to the mobile terminal, the method further comprises:
receiving target data that is transmitted, to the network-side device, by the mobile terminal according to the measurement result of a second metric of the downlink reference signal, in a case that the second metric of the downlink reference signal meets a second preset condition; and
determining whether the preset trigger condition is met based on the target data, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value.

Before transmitting, by the network-side device, the first indication message to the mobile terminal in response to that the preset trigger condition is met, the method further comprises:
transmitting a configuration of beam reporting to the mobile terminal after a successful random access procedure;
receiving a beam report transmitted by the mobile terminal through beam training based on the configuration of the beam reporting; and
determining an optimal BPL for data transmission based on the beam report.

The optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
and the indicating the new BPL comprises: indicating a new traffic channel BPL, and before transmitting, by the network-side device, the first indication message to the mobile terminal, the method further comprises:
transmitting a second indication message to the mobile terminal, wherein the second indication message is used to indicate initiating local beam training, and the local beam training comprises performing narrow beam training within an optimal control channel BPL;
receiving a beam report of the narrow beam training fed back by the mobile terminal; and
determining an optimal narrow beam based on the beam report, and setting the optimal narrow beam as the new traffic channel BPL.

In a second aspect, a method for beam recovery processing is further provided according to an embodiment of the present disclosure, and includes:
receiving, by a mobile terminal, a first indication message transmitted by a network-side device, where the first indication message is transmitted, in response to that a preset trigger condition is met, by the network-side device to the mobile terminal, the first indication message is used to indicate a new beam pair link BPL, and the preset trigger condition includes that a beam recovery mechanism is determined to be initiated by the mobile terminal based on a measurement result of a downlink reference signal or a beam recovery mechanism is determined to be initiated by the network-side device based on a measurement result of an uplink reference signal; and
switching to the new BPL according to the first indication message for data transmission, where the new BPL comprises BPLs corresponding to at least two transmission and reception points.

Before receiving, by the mobile terminal, the first indication message transmitted by the network-side device, the method further comprises:
measuring a second metric of the downlink reference signal; and
transmitting target data to the network-side device according to a measurement result of the second metric, in a case that the second metric of the downlink reference signal meets a second preset condition, wherein the target data is configured for the network-side device to determine whether the preset trigger condition is met, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value.

Before receiving, by the mobile terminal, the first indication message transmitted by the network-side device, the method further comprises:
receiving a configuration of beam reporting transmitted by the network-side device; and
transmitting, to the network-side device, a beam report through beam training based on the configuration of the beam reporting, wherein the beam report through beam training is used for the network-side device to determine an optimal BPL for data transmission.

The optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
and the indicating the new BPL comprises: indicating a new traffic channel BPL, and before receiving, by the mobile terminal, the first indication message transmitted by the network-side device, the method further comprises:
receiving a second indication message transmitted by the network-side device, wherein the second indication message is used to indicate to initiate local beam training, and the local beam training comprises performing narrow beam training within an optimal control channel BPL; and
feeding a beam report of the narrow beam training back to the network-side device, wherein the beam report is configured for the network-side device to determine an optimal narrow beam and set the optimal narrow beam as the new traffic channel BPL.

In a third aspect, a network-side device is further provided according to an embodiment of the present disclosure, and includes: an indication message transmitting module, configured to transmit a first indication message to a mobile terminal in response to that a preset trigger condition is met, where the first indication message is used to indicate a new beam pair link BPL, and the preset trigger condition includes that a beam recovery mechanism is determined to be initiated by the mobile terminal based on a measurement result of a downlink reference signal or a beam recovery mechanism is determined to be initiated by the network-side device based on a measurement result of an uplink reference signal; and a first communication switching module, configured to switch to the new BPL for data transmission, where the new BPL comprises BPLs corresponding to at least two transmission and reception points.

The network-side device further comprises:
a target data reception module, configured to receive target data that is transmitted, to the network-side device, by the mobile terminal according to the measurement result of a second metric of the downlink reference signal, in a case that the second metric of the downlink reference signal meets a second preset condition; and
a second determining module, configured to determine whether the preset trigger condition is met based on the target data, wherein the target data is a random access preamble of a physical random access channel, PRACH, or a request message transmitted by the mobile terminal to the network-side device;
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value.

The network-side device further comprises:
a configuration transmitting module, configured to transmit a configuration of beam reporting to a mobile terminal after a successful random access procedure;
a beam report reception module, configured to receive a beam report transmitted by the mobile terminal through beam training based on the configuration of the beam reporting; and
a third determining module, configured to determine an optimal BPL for data transmission based on the beam report.

The optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
and the new BPL comprises: a new traffic channel BPL, and the network-side device further comprises a processing module,
and the indication message transmitting module is configured to transmit a second indication message to the mobile terminal before transmitting the first indication message to the mobile terminal, wherein the second indication message is used to indicate initiating local beam training, and the local beam training comprises performing narrow beam training within an optimal control channel BPL;
the beam report reception module is configured to receive a beam report of the narrow beam training fed back by the mobile terminal; and
the processing module is configured to determine an optimal narrow beam based on the beam report, and set the optimal narrow beam as the new traffic channel BPL.

In a fourth aspect, a mobile terminal is further provided according to an embodiment of the present disclosure, and includes: an indication message reception module, configured to receive a first indication message transmitted by a network-side device, where the first indication message is transmitted, in response to that a preset trigger condition is met, by the network-side device to the mobile terminal, the first indication message is used to indicate a new beam pair link BPL, and the preset trigger condition includes that a beam recovery mechanism is determined to be initiated by the mobile terminal based on a measurement result of a downlink reference signal or a beam recovery mechanism is determined to be initiated by the network-side device based on a measurement result of an uplink reference signal; and a second communication switching module, configured to switch to the new BPL according to the first indication message for data transmission, where the new BPL comprises BPLs corresponding to at least two transmission and reception points.

The mobile terminal further comprises:
a second measurement module, configured to measure a second metric of the downlink reference signal; and
a target data transmitting module, configured to transmit target data to the network-side device according to a measurement result of the second metric, in a case that the second metric of the downlink reference signal meets a second preset condition, wherein the target data is configured for the network-side device to determine whether the preset trigger condition is met, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value.

The mobile terminal further comprises:
a configuration receiving module, configured to receive a configuration of beam reporting transmitted by the network-side device; and
a beam report transmitting module, configured to transmit, to the network-side device, a beam report through beam training based on the configuration of the beam reporting, wherein the beam report through the beam training is used for the network-side device to determine an optimal BPL for data transmission, wherein the optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL.

The new BPL comprises: a new traffic channel BPL, and the mobile terminal further comprises a beam report feedback module,
and the new BPL comprises: a new traffic channel BPL, and the mobile terminal further comprises a beam report feedback module,
and the indication message reception module is further configured to receive a second indication message transmitted by the network-side device before receiving the first indication message transmitted by the network-side device, wherein the second indication message is used to indicate to initiate local beam training, and the local beam training comprises performing narrow beam training within an optimal control channel BPL; and
the beam report feedback module is configured to feed a beam report of the narrow beam training back to the network-side device, wherein the beam report is used for the network-side device to determine an optimal narrow beam and set the optimal narrow beam as the new traffic channel BPL.

### BRIEF DESCRIPTION OF THE DRAWINGS

In order to more clearly illustrate technical solutions of embodiments of the present disclosure, drawings used in the description of the embodiments of the present disclosure will be briefly described below. It is obvious that the drawings described below are only some embodiments of the present disclosure, and based on these drawings, other drawings can also be obtained by those of ordinary skill in the art without creative effort.
Fig. 1 is a flow chart of a method for beam recovery processing according to some embodiments of the present disclosure;
Fig. 2 is a flow chart of a method for beam recovery processing according to some embodiments of the present disclosure;
Fig. 3 is a flow chart of a method for beam recovery processing according to some embodiments of the present disclosure;
Fig. 4 is a flow chart of a method for beam recovery processing according to some embodiments of the present disclosure;
Fig. 5 is a flow chart of a method for beam recovery processing according to some embodiments of the present disclosure;
Fig. 6 is a schematic diagram of a BPL between a mobile terminal and a network-side device that is used in a method for beam recovery processing according to embodiments of the present disclosure;
Fig. 7 is a schematic diagram of a BPL between a mobile terminal and a network-side device used in a method for beam recovery processing according to embodiments of the present disclosure;
Fig. 8 is a schematic diagram of a BPL between a mobile terminal and a network-side device used in a method for beam recovery processing according to embodiments of the present disclosure;
Fig. 9 is a flowchart of a method for beam recovery processing according to some embodiments of the present disclosure;
Fig. 10 is a flowchart of a method for beam recovery processing according to some embodiments of the present disclosure;
Fig. 11 is a flowchart of a method for beam recovery processing according to some embodiments of the present disclosure;
Fig. 12 is a flowchart of a method for beam recovery processing according to some embodiments of the present disclosure;
Fig. 13 is a structural diagram of a network-side device according to some embodiments of the present disclosure;
Fig. 14 is a structural diagram of a mobile terminal according to some embodiments of the present disclosure;
Fig. 15 is a structural diagram of a network-side device according to some embodiments of the present disclosure;
Fig. 16 is a structural diagram of a mobile terminal according to some embodiments of the present disclosure; and
Fig. 17 is a structural diagram of a mobile terminal according to some embodiments of the present disclosure.

### DETAILED DESCRIPTION

The technical solutions in embodiments of the present disclosure are clearly and completely described in the following with reference to the drawings in the embodiments of the present disclosure. It is obvious that the described embodiments are a part not all of embodiments of the present disclosure. All other embodiments obtained by a person of ordinary skill in the art based on the embodiments of the present disclosure without creative effort shall fall within the protection scope of the present disclosure.

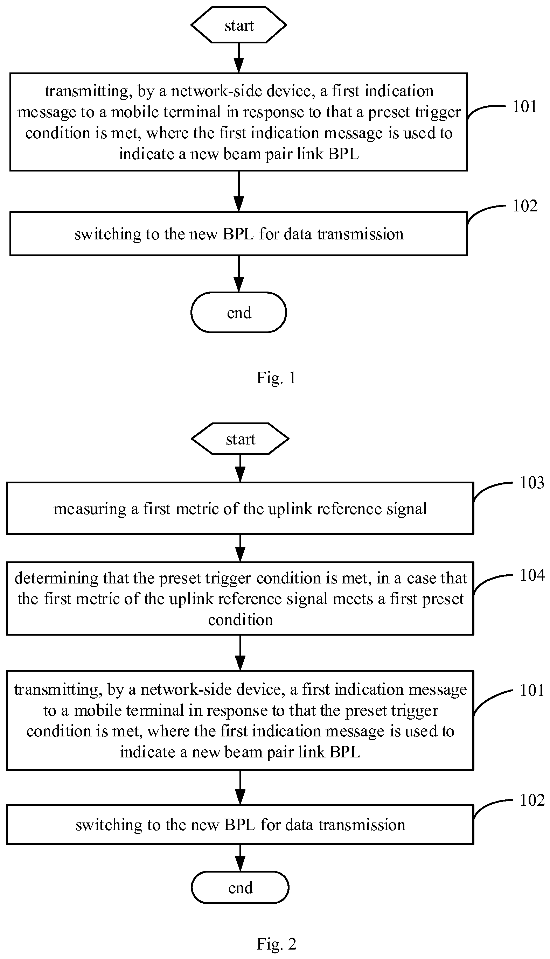

Reference is made to Fig. 1, which is a flow chart of a method for beam recovery processing according to some embodiments of the present disclosure. As shown in Fig. 1, the method includes the following steps.

Step 101 includes: transmitting, by a network-side device, a first indication message to a mobile terminal in response to that a preset trigger condition is met, where the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal.

The method for beam recovery processing according to the embodiments of the present disclosure is mainly applied in a wireless communication system, and is to determine whether a transmission quality of a radio link deteriorates and perform beam recovery processing.

It can be understood that the network-side device (also referred to as an MF access device) may be a base station. Of course, it can be understood that the form of the base station is not limited, and the base station may be a macro base station (Macro Base Station) or a pico base station (Pico Base Station), a Node B (mobile base station in 3G), an enhanced base station (ENB), a home enhanced base station (Femto eNB, or Home eNode B, or Home eNB, or HNEB), a relay station, an access point, a remote radio unit (Remote Radio Unit, RRU), a remote radio head (Remote Radio Head, RRH), and the like.

Specifically, in the embodiments, whether the transmission quality of the radio link is degraded or not is determined based on the measurement result of the uplink reference signal or the downlink reference signal, thereby determining whether to initiate the beam recovery mechanism. When the transmission quality of the radio link deteriorates, it is determined that the beam recovery mechanism is started, and when the radio link is successful, it is determined that the beam recovery mechanism does not need to be started.

The uplink reference signal may include: a demodulation reference signal (DeModulation Reference Signal, DMRS) and/or a sounding reference signal (Sounding Reference Signal, SRS) of the uplink traffic channel.

The downlink reference signal may include: a demodulation reference signal (DeModulation Reference Signal, DMRS) and/or a sounding reference signal (Sounding Reference Signal, SRS) of the downlink traffic channel.

In an embodiment, the network-side device may directly measure the uplink reference signal to monitor the beam quality and determine whether to initiate the beam recovery mechanism. In addition, the downlink reference signal may be measured by the mobile terminal to monitor the beam quality, and the mobile terminal transmits the monitored result to the network-side device to indicate the network-side device whether to initiate the beam recovery mechanism.

The network-side device transmits the first indication message to the mobile terminal in response to that the beam recovery mechanism is determined to be initiated either by the network-side device or by the mobile terminal, and the first indication message indicates a new BPL (Beam pair link). It should be understood that the number of the new BPLs may be set according to actual needs. As an example, the new BPLs may be one BPL, or may be a PBL group composed of multiple PBLs.

Step 102 includes: switching to the new BPL for data transmission.

In this step, after transmitting the first indication message, the network-side device switches the BPL, and at the same time, after receiving the first indication message, the mobile terminal switches the BPL to a BPL indicated by the first indication message. Therefore, data transmission is performed on the new BPL.

In such a manner, in the embodiments of the present disclosure, if the preset trigger condition is met, the network-side device transmits the first indication message to the mobile terminal, and switches to the new BPL for data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. The uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switches to the new BPL and performs data transmission thereon. The delay of beam recovery is reduced in the present disclosure, as compared with the related art that a high layer monitors a link state, initiates RRC reestablishment, performs beam training to find an optimal beam, and recovers data transmission.

It should be noted that monitoring the link state may be performed by the mobile terminal or by the network-side device, which will be described below in detail in two different embodiments.

In an embodiment, if whether to initiate the beam recovery mechanism is determined by the network-side device according to the measurement result of the uplink reference signal, reference may be made to Fig. 2, which is a flowchart of a method for beam recovery processing according to embodiments of the present disclosure. As shown in Fig. 2, prior to the step 101, the method further includes steps 103 and 104.

Step 103 includes: measuring a first metric of the uplink reference signal.

In this step, specific parameters of the first metric may be set according to practical requirements. For example, in an embodiment, the first metric includes at least one of: a reference signal receiving power (Reference Signal Receiving Power, RSRP), and a reference signal receiving quality (Reference Signal Receiving Quality, RSRQ), a signal to noise ratio (SIGNAL-NOISE RATIO, SNR), a channel quality indicator (Channel Quality Indicator, CQI), or negative acknowledgement NACK in hybrid automatic repeat request acknowledgement (HARQ-ACK) information.

In the embodiment, the network-side device may measure the uplink reference signal according to the first metric to obtain a corresponding result.

Step 104 includes: determining that the preset trigger condition is met, in a case that the first metric of the uplink reference signal meets a first preset condition.

In this step, the content of the first preset condition may be set according to actual needs. In an embodiment, in a case that the first metric includes at least one of a reference signal receiving power RSRP, a reference signal receiving quality RSRQ, a signal to noise ratio SNR, or a channel quality indicator CQI, the first preset condition includes that the number of cases is greater than a first preset value, where the case is that a measurement result of the first metric is smaller than a corresponding preset threshold value. In a case that the first metric includes the negative acknowledgement NACK in the HARQ-ACK information, the first preset condition further includes that the number of the NACKs is greater than the first preset value in the preset time period.

Specifically, a value of the above threshold may be set according to actual needs, and values of the thresholds corresponding to different parameters of the first metric may be different. It should be understood that, in other embodiments, the first preset condition may be further set to whether an average value of an accumulated value of a specific parameter of the first metric in a preset time period is less than a corresponding threshold value, if so, a beam quality is considered to become poor, and it is determined that the beam recovery mechanism needs to be initiated.

In a case that the first metric is configured with multiple parameters, it may be determined that the beam recovery mechanism needs to be initiated when one of the parameters meets a corresponding first preset condition, or it may be determined that the beam recovery mechanism needs to be initiated only when all the parameters respectively meet corresponding first preset conditions. Optionally, it is also possible that when one of the parameters of the first metric meets the corresponding first preset condition, the counter is incremented by one, and whether the beam recovery mechanism needs to be initiated depends on whether a value of the counter is greater than a first preset value, which is not repeated herein.

In this embodiment, the first preset value may be flexibly set to improve the accuracy and flexibility of determining whether the beam quality deteriorates.

The NACK indicator is used as a beam metric for a traffic channel, when a terminal receives a downlink traffic channel PDSCH (Physical Downlink Shared Channel) and a decoding error occurs, the NACK for a HARQ signaling is generated to feed back to the network-side device, which is used to indicate this transmission error. Whenever a NACK is generated, the counter may be incremented by one, and whether the beam recovery mechanism needs to be initiated is determined depending on whether a total value of the counter within a preset time period is greater than a first preset value.

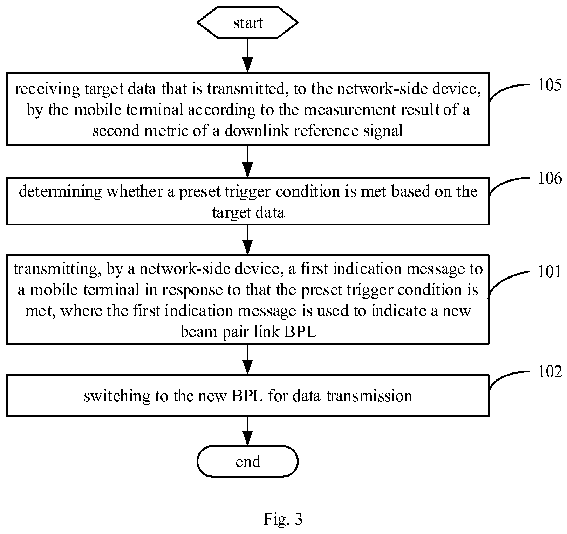

In another embodiment, if whether to initiate the beam recovery mechanism is determined by the mobile terminal according to the measurement result of the downlink reference signal, reference may be made to Fig. 3, which is a flowchart of a method for beam recovery processing according to embodiments of the present disclosure. As shown in Fig. 3, prior to the step 101, the method includes: steps 105 and 106, and step 105 includes: receiving target data that is transmitted, to the network-side device, by the mobile terminal according to the measurement result of a second metric of a downlink reference signal.

In this step, specific parameters of the second metric may be set according to actual needs. For example, in an embodiment, the second metric includes at least one of a reference signal receiving power RSRP, a reference signal receiving quality RSRQ, a signal to noise ratio SNR, a channel quality indication CQI, or negative acknowledgement NACK in hybrid automatic repeat request acknowledgement (HARQ-ACK) information.

In the embodiment, the mobile terminal may perform measurement on the downlink reference signal according to the second metric to obtain a corresponding result, and transmit the corresponding target data according to the measured result, so that the network-side device initiates the beam recovery mechanism according to the target data.

Step 106 includes: determining whether a preset trigger condition is met based on the target data.

In this step, a way of reporting the target data may be set according to actual needs. In addition, the content of the target data may also be set according to actual needs. For example, the target data may be a message for directly notifying the network-side device to initiate the beam recovery mechanism, or a message for implicitly notifying the network-side device whether to initiate the beam recovery mechanism, which is described below in detail.

In an embodiment, the mobile terminal reports a random access preamble of a physical random access channel PRACH, that is, the target data may be the random access preamble of the physical random access channel PRACH. In order to distinguish it from a preamble in a conventional random access process, it can be designed as a new type, for example, a new time-frequency transmission pattern. That is, according to a certain rule, the base station transmits beams by turns and in different spatial directions.

Specifically, the mobile terminal transmits a PRACH preamble to the base station, maybe in a beam sweeping manner. As an example, a direction of the original BPL is taken as an center and uplink beams are sequentially transmitted in sequence from a first direction near the direction to a second direction away from the direction; or the uplink beams are sequentially transmitted in sequence from the second direction to the first direction; or the uplink beams are sequentially transmitted in a certain hopping sequence between the first direction and the second direction.

In another embodiment, the mobile terminal may transmit a request to the network-side device, that is, the target data may be a request message transmitted by the mobile terminal to the network-side device.

In some optional embodiments, the request message carries a first signaling for indicating to initiate a beam recovery mechanism and/or a second signaling for indicating a BPL used in initiating a beam recovery mechanism; or the preamble carries the first signaling and/or the second signaling. For example, whether or not to initiate the beam recovery is indicated by one data bit in the first signaling. The BPL used for a beam recovery mechanism that is monitored by the mobile terminal is indicated by the preset number of data bits in second signaling.

It should be noted that the BPL used to initiate the beam recovery mechanism may be one BPL or multiple BPLs (i.e., a BPL group). In an embodiment, the BPL used in initiating a beam recovery mechanism that is monitored by the mobile terminal may be an optimal BPL detected by the mobile terminal, or may be a BPL recommended by the mobile terminal from the optimal BPL. Specifically, the BPL reported by the mobile terminal may maintain the same as the optimal BPL currently used by the network-side device, or may be changed to other BPLs, which is not further limited herein.

Specifically, when the request message is transmitted to the network-side device, the network-side device determines whether to initiate the beam recovery mechanism according to the request message, and a manner of transmitting the request message may be set according to actual needs. For example, the request message is carried and transmitted on an uplink control channel, or transmitted using a wide beam or transmitted simultaneously using multiple narrow beams.

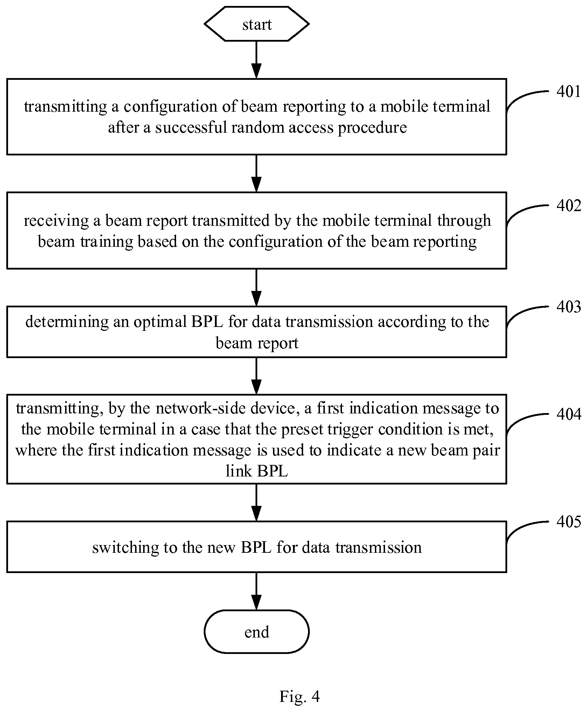

Further, before the beam quality is monitored, all mobile terminals need to access a wireless network, that is, access the wireless network provided by the network-side device, and establish a BPL. Specifically, referring to Fig. 4, the method for beam recovery processing includes:
step 401: transmitting a configuration of beam reporting to a mobile terminal after a successful random access procedure;
step 402: receiving a beam report transmitted by the mobile terminal through beam training based on the configuration of the beam reporting;
step 403: determining an optimal BPL for data transmission according to the beam report;
step 404: transmitting, by the network-side device, a first indication message to the mobile terminal in a case that the preset trigger condition is met, where the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal; and
step 405, switching to the new BPL for data transmission.

In the embodiment, the optimal BPL refers to that directions of a transmission beam (Tx beam) and a reception beam (Rx beam) are aligned to obtain an optimal data transmission quality. The number of the found optimal BPLs may be multiple, and the BPLs are from a same transmission and reception point (Transmission and Reception Point, TRP) or different TRPs. There is no restriction on whether multiple TRPs belong to a same base station. The maintenance and use of the BPLs by the TRPs can be controlled or interacted by the base station.

That is, in the embodiment, the optimal BPL includes one or more target BPLs. Each of the target BPLs may include one or two sets of BPLs, that is, each of the target BPLs includes at least one of a control channel BPL for control channel transmission or a traffic channel BPL for traffic channel transmission. All of the target BPLs include at least one control channel BPL and at least one traffic channel BPL.

Specifically, the control channel BPL for control channel transmission is usually transmitted by using a wide beam, or may be jointly transmitted by using multiple narrow beams. The traffic channel BPL is usually transmitted by using a narrow beam, or may be jointly transmitted by using multiple narrow beams. That is to say, in the embodiment, a manner of performing data transmission on multiple target BPLs includes at least one of: transmitting same information, using a same time-frequency resource, frequency division multiplexing FDM, time division multiplexing TDM, or code division multiplexing CDM.

Further, the content of indicating a new beam pair link BPL may be set according to actual needs. For example, in an embodiment, the indicating a new beam pair link BPL includes: indicating a new traffic channel BPL. In another embodiment, the indicating a new beam pair link BPL further includes: indicating a new control channel BPL.

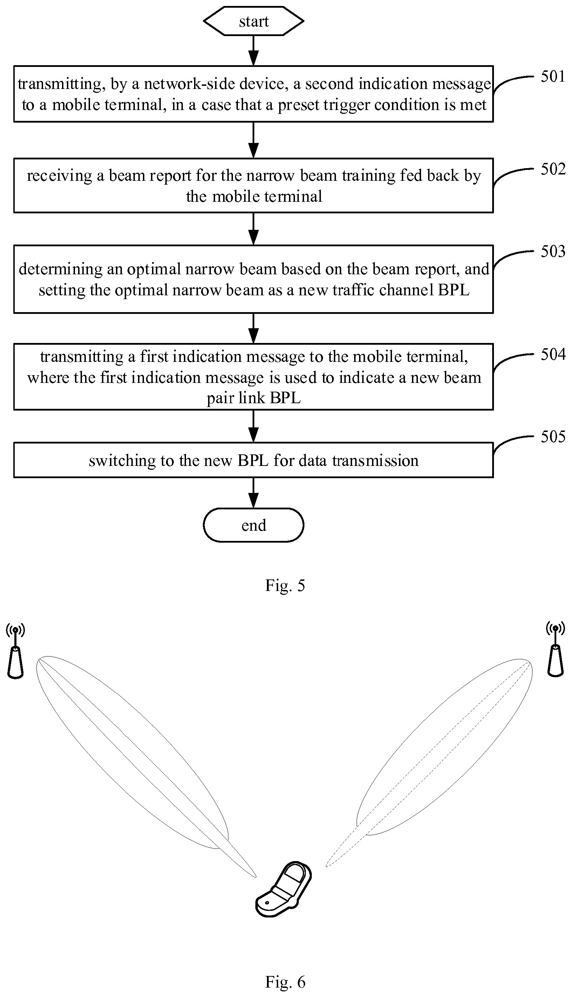

In addition, before the new traffic channel BPL is indicated, the narrow beam may also be measured to determine the optimal BPL, thereby improving the transmission quality of the traffic channel BPL. Referring to Fig. 5, the method for beam recovery processing includes:
step 501: transmitting, by a network-side device, a second indication message to a mobile terminal, in a case that a preset trigger condition is met, where the second indication message is used to indicate initiating local beam training, and the local beam training includes performing narrow beam training within an optimal control channel BPL;
step 502: receiving a beam report for the narrow beam training fed back by the mobile terminal;
step 503: determining an optimal narrow beam based on the beam report, and setting the optimal narrow beam as a new traffic channel BPL;
step 504: transmitting a first indication message to the mobile terminal, where the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal; and
step 505: switching to the new BPL for data transmission.

In this embodiment, beam training can be performed on the narrow beam in the optimal control channel BPL to determine an optimal narrow beam, and the optimal narrow beam is indicated as a new traffic channel BPL, thereby improving transmission quality of the traffic channel BPL.

For different conditions of traffic channel BPL transmission and control channel BPL transmission conditions and beam recovery, different examples will be described below.

After the BPL is established, the number of the optimal BPLs as found may be multiple, the multiple BPLs are from different TRPs, and the BPL has two sets, including the control channel BPL and the traffic channel BPL.

As shown in Fig. 6, a wide BPL (i.e., control channel BPL) and a narrow BPL (i.e., traffic channel BPL) are established between two TRPs and a mobile terminal, respectively. The same information content may be transmitted on the wide BPL, and when one wide BPL is blocked, the other BPL can still be used normally.

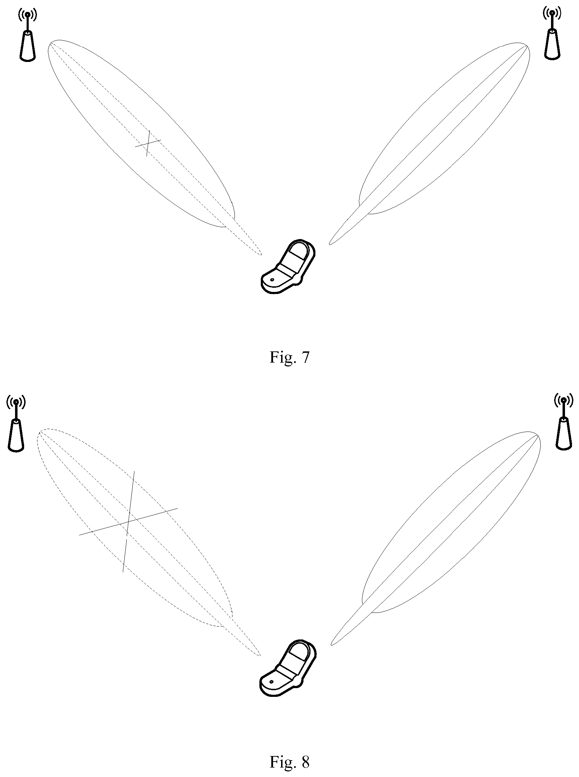

As shown in Fig. 7, even if the narrow BPL of the traffic channel is blocked, the wide BPL of the control channel can still be connected. As shown in Fig. 8, the narrow BPL of the traffic channel and the wide BPL of the control channel are blocked. In this case, when the mobile terminal reports a request message or transmits a preamble, the request or the preamble may carry a first signaling and a second signaling, the first signaling is used to indicate initiating a beam recovery mechanism (for example, 1 bit is used to indicate initiating), and the second signaling is used to indicate an optimal physical downlink control channel (Physical Downlink Control Channel, PDCCH) BPL and/or an optimal PDSCH BPL. That is, if the current wide BPL has a good quality enough for transmission, it can continue to be used. If the current wide BPL is uninterrupted but has a poor quality, or the current wide BPL is blocked, the request message needs to carry a message about using another new BPL.

The network-side device indicates a new PDCCH beam and/or a new PDSCH beam to the mobile terminal according to the request message fed back by the mobile terminal. The new PDCCH beam may be the original wide BPL or a new wide BPL, and the new PDSCH beam may be another narrow BPL in the original wide BPL, or a narrow BPL in the new wide BPL.

In addition, the network-side device may also indicate the mobile terminal to initiate local beam training. For example, a total of three narrow beams are included in the wide BPL indicated by the network-side device, and the three narrow beams are transmitted by turns, that is, local beam training. The mobile terminal receives the transmitted narrow beams and feeds back the optimal narrow beam, thereby determining a new narrow BPL within the wide BPL. In the embodiment, the final new BPL is determined based on the indication of the network-side device, which can be faster and more accurate.

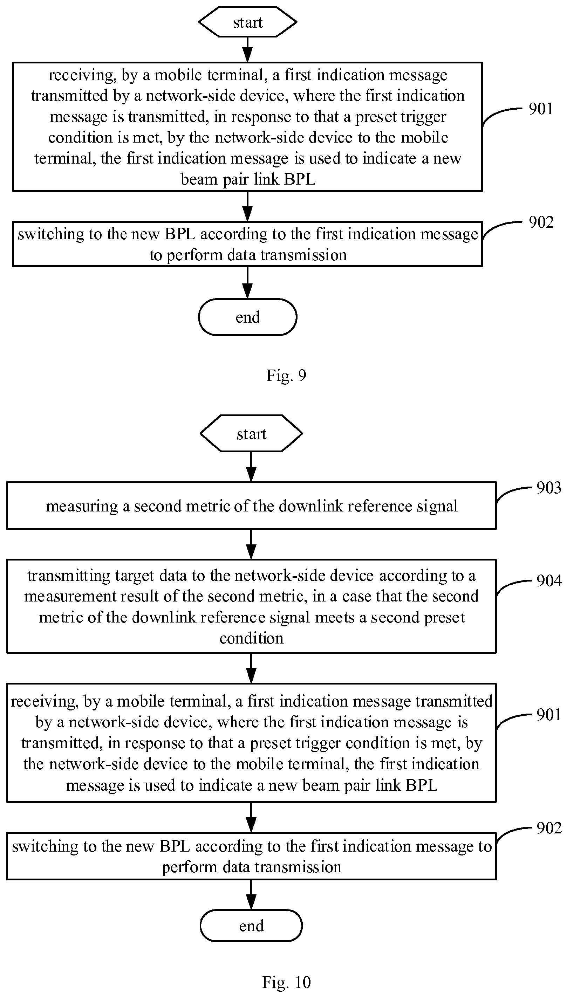

Reference is made to Fig. 9, which is a flowchart of a method for beam recovery processing according to embodiments of the present disclosure. As shown in Fig. 9, the method for beam recovery processing includes the following steps 901 and 902.

Step 901 includes: receiving, by a mobile terminal, a first indication message transmitted by a network-side device, where the first indication message is transmitted, in response to that a preset trigger condition is met, by the network-side device to the mobile terminal, the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal.

The method for beam recovery processing according to the embodiments of the present disclosure is mainly applied in a wireless communication system, and is to determine whether a transmission quality of a radio link becomes deteriorated and perform beam recovery processing.

It can be understood that the network-side device (also referred to as an MF access device) may be a base station. Of course, it can be understood that the form of the base station is not limited, and the base station may be a macro base station (Macro Base Station) or a pico base station (Pico Base Station), a Node B (mobile base station in 3G), an enhanced base station (ENB), a home enhanced base station (Femto eNB, or Home eNode B, or Home eNB, or HNEB), a relay station, an access point, a remote radio unit (Remote Radio Unit, RRU), a remote radio head (Remote Radio Head, RRH), and the like.

Specifically, in the embodiments, whether the transmission quality of the radio link is degraded or not is determined based on the measurement result of the uplink reference signal or the downlink reference signal, and whether to initiate the beam recovery mechanism is determined accordingly. When the transmission quality of the radio link deteriorates, it is determined that the beam recovery mechanism is activated, and when the radio link does not deteriorate, it is determined that the beam recovery mechanism does not need to be activated.

The uplink reference signal may include: a demodulation reference signal (DeModulation Reference Signal, DMRS) and/or a sounding reference signal (Sounding Reference Signal, SRS) of the uplink traffic channel.

The downlink reference signal may include: a demodulation reference signal (DeModulation Reference Signal, DMRS) and/or a sounding reference signal (Sounding Reference Signal, SRS) of the downlink traffic channel.

In an embodiment, the network-side device may directly measure the uplink reference signal to monitor the beam quality and determine whether to initiate the beam recovery mechanism. In addition, the downlink reference signal may be measured by the mobile terminal to monitor the beam quality, and the mobile terminal transmits the monitored result to the network-side device to indicate the network-side device whether to initiate the beam recovery mechanism.

The network-side device transmits the first indication message to the mobile terminal in response to that the beam recovery mechanism is determined to be initiated either by the network-side device or by the mobile terminal, and the first indication message indicates a new BPL. It should be understood that the number of the new BPLs may be set according to actual needs. As an example, the new BPLs may be one BPL, or may be a PBL group composed of multiple PBLs.

Step 902 includes: switching to the new BPL according to the first indication message to perform data transmission.

In this step, after transmitting the first indication message, the network-side device switches the BPL, and at the same time, after receiving the first indication message, the mobile terminal switches the BPL to a BPL indicated by the first indication message. Therefore, data transmission is performed on the new BPL.

In such a manner, in the embodiments of the present disclosure, the mobile terminal receives the first indication message transmitted by the network-side device and switches to the new BPL according to the first indication message to perform data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

In some optional embodiments, it should be noted that monitoring the link state may be performed by the mobile terminal or by the network-side device. The monitoring the link state by the mobile terminal will be described below in detail.

In some optional embodiments, referring to Fig. 10, prior to step 901, the method further includes: steps 903 and 904.

Step 903 includes: measuring a second metric of the downlink reference signal.

In this step, specific parameters of the second metric may be set according to actual needs. For example, in an embodiment, the second metric includes at least one of: a reference signal receiving power RSRP, and a reference signal receiving quality RSRQ, a signal to noise ratio SNR, a channel quality indicator CQI, or negative acknowledgement NACK of HARQ-ACK information.

In the embodiment, the mobile terminal may measure the downlink reference signal according to the second metric to obtain a corresponding result, and transmit corresponding target data according to the measured result, so that the network-side device initiates beam recovery mechanism according to the target data.

Step 904 includes: transmitting target data to the network-side device according to a measurement result of the second metric, in a case that the second metric of the downlink reference signal meets a second preset condition, where the target data is used by the network-side device to determine whether the preset trigger condition is met.

In this step, the content of the second preset condition may be set according to actual needs. For example, in an embodiment, in a case that the second metric includes at least one of a reference signal receiving power RSRP, a reference signal receiving quality RSRQ, a signal to noise ratio SNR, or a channel quality indicator CQI, the second preset condition includes that the number of occurrences of a case is greater than a second preset value in a preset time period, wherein the case is that a measurement result of the second metric is smaller than a corresponding preset threshold value; or in a case that the second metric includes the negative acknowledgement NACK in the HARQ-ACK information, the second preset condition further comprises that the number of occurrences of the NACK is greater than the second preset value in the preset time period.

A way of reporting the target data may be set according to actual needs. In addition, the content of the target data may also be set according to actual needs. For example, the target data may be a message for directly notifying the network-side device to initiate the beam recovery mechanism, or a message for implicitly notifying the network-side device whether to initiate the beam recovery mechanism, which is described below in detail.

In an embodiment, the mobile terminal reports a random access preamble of a physical random access channel PRACH, that is, the target data may be the random access preamble of the physical random access channel PRACH. In order to distinguish it from a preamble in a conventional random access process, it can be designed as a new type, such as a new time-frequency transmission pattern. That is, according to a certain rule, the base station transmits beams by turns and in different spatial directions.

Specifically, the mobile terminal transmits a PRACH preamble to the base station, maybe in a beam sweeping manner. As an example, a direction of the original BPL is taken as an center and uplink beams are sequentially transmitted in sequence from a first direction near the direction to a second direction away from the direction; or the uplink beams are sequentially transmitted in sequence from the second direction to the first direction; or the uplink beams are sequentially transmitted in a certain hopping sequence between the first direction and the second direction.

In another embodiment, the mobile terminal may transmit a request to the network-side device, that is, the target data may be a request message transmitted by the mobile terminal to the network-side device.

In some optional embodiments, the request message carries a first signaling for indicating that a beam recovery mechanism is initiated and/or a second signaling for indicating a BPL used in initiating a beam recovery mechanism; or the preamble carries the first signaling and/or the second signaling. For example, whether or not to initiate the beam recovery is indicated by one data bit in the first signaling. The BPL used for a beam recovery mechanism that is monitored by the mobile terminal is indicated by the preset number of data bits in second signaling.

It should be noted that the BPL used for the beam recovery mechanism may be one BPL or multiple BPLs (i.e., a BPL group). In an embodiment, the BPL used for a beam recovery mechanism that is monitored by the mobile terminal may be an optimal BPL detected by the mobile terminal, or may be a BPL recommended by the mobile terminal from the optimal BPL. Specifically, the BPL reported by the mobile terminal may maintain the same as the optimal BPL currently used by the network-side device, or may be changed to other BPLs, which is not further limited herein.

Specifically, when the request message is transmitted to the network-side device, the network-side device determines whether to initiate the beam recovery mechanism according to the request message, and a manner of transmitting the request message may be set according to actual needs. For example, the request message is carried and transmitted on an uplink control channel, or transmitted using a wide beam or transmitted simultaneously using multiple narrow beams.

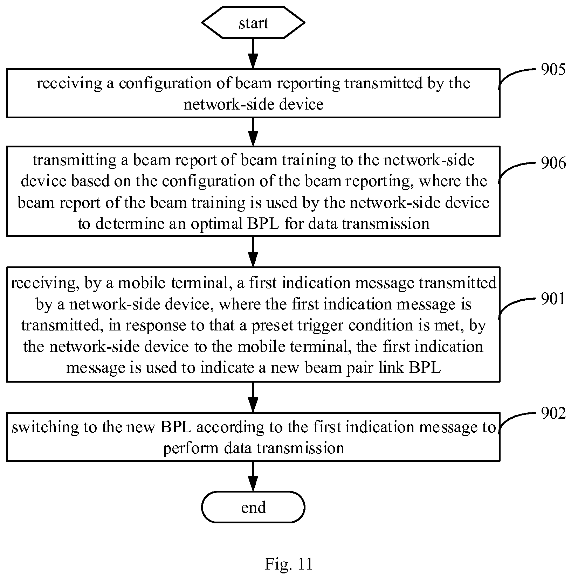

Further, before the beam quality is monitored, all mobile terminals need to access a wireless network, that is, access the wireless network provided by the network-side device, and establish a BPL. Specifically, referring to Fig. 11, prior to the step 901, the method for beam recovery processing includes:
step 905: receiving a configuration of beam reporting transmitted by the network-side device; and
step 906: transmitting a beam report of beam training to the network-side device based on the configuration of the beam reporting, where the beam report of the beam training is used by the network-side device to determine an optimal BPL for data transmission.

In the embodiment, the optimal BPL refers to that directions of a transmission beam (Tx beam) and a reception beam (Rx beam) are aligned to obtain the best data transmission quality. The number of the found optimal BPLs may be multiple, and the BPLs are from a same transmission and reception point (Transmission and Reception Point, TRP) or different TRPs. There is no restriction on whether multiple TRPs belong to a same base station. The maintenance and use of the BPLs by the TRPs can be controlled or interacted by the base station.

That is, in the embodiment, the optimal BPL includes one or more target BPLs. Each of the target BPLs may include one or two sets of BPLs, that is, each of the target BPLs includes at least one of a control channel BPL for control channel transmission or a traffic channel BPL for traffic channel transmission. All of the target BPLs include at least one control channel BPL and at least one traffic channel BPL.

Specifically, the control channel BPL for control channel transmission is usually transmitted by using a wide beam, or may be jointly transmitted by using multiple narrow beams. The traffic channel BPL is usually transmitted by using a narrow beam, or may be jointly transmitted by using multiple narrow beams. That is to say, in the embodiment, a manner of performing data transmission on multiple target BPLs includes at least one of: transmitting same information, using a same time-frequency resource, frequency division multiplexing FDM, time division multiplexing TDM, or code division multiplexing CDM.

Further, the content of indicating a new beam pair link BPL may be set according to actual needs. For example, in an embodiment, the indicating a new beam pair link BPL includes: indicating a new traffic channel BPL. In another embodiment, the indicating a new beam pair link BPL further includes: indicating a new control channel BPL.

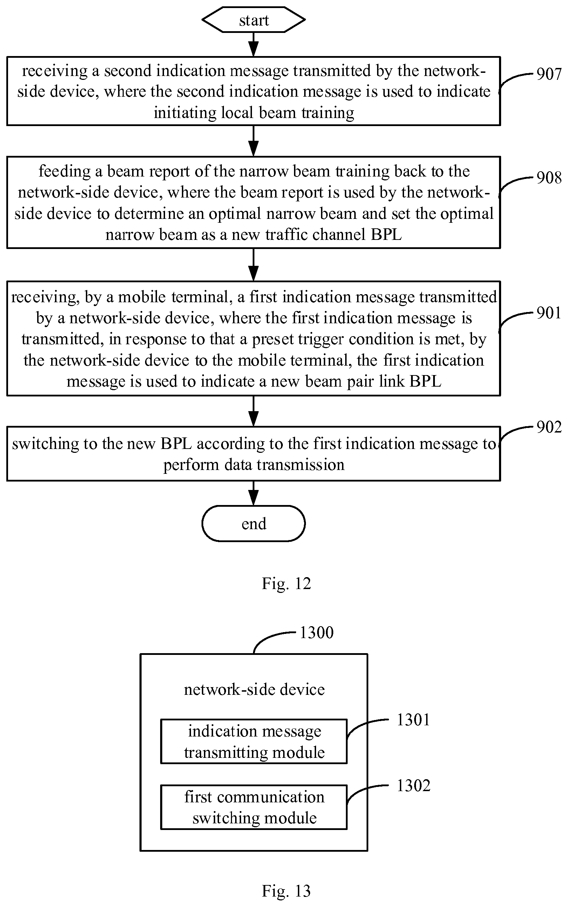

In addition, before the new traffic channel BPL is indicated, the narrow beam may also be measured to determine the optimal BPL, thereby improving the transmission quality of the traffic channel BPL. Referring to Fig. 12, prior to the above step 901, the method further includes the following steps:
step 907: receiving a second indication message transmitted by the network-side device, where the second indication message is used to indicate initiating local beam training, and the local beam training includes narrow beam training performed in the optimal control channel BPL; and
step 908: feeding a beam report of the narrow beam training back to the network-side device, where the beam report is used by the network-side device to determine an optimal narrow beam and set the optimal narrow beam as a new traffic channel BPL.

In this embodiment, beam training can be performed on the narrow beam in the optimal control channel BPL to determine an optimal narrow beam, and the optimal narrow beam is indicated as a new traffic channel BPL, thereby improving transmission quality of the traffic channel BPL.

For different conditions of traffic channel BPL transmission and control channel BPL transmission conditions and beam recovery, different examples will be described below.

After the BPL is established, the number of the optimal BPLs as found may be multiple, the multiple BPLs are from different TRPs, and the BPL has two sets, including the control channel BPL and the traffic channel BPL.

As shown in Fig. 6, a wide BPL (that is, control channel BPL) and a narrow BPL (that is, traffic channel BPL) are established between two TRPs and a mobile terminal, respectively. The same information content may be transmitted on the wide BPL, and when one wide BPL is blocked, the other BPL can still be used normally.

As shown in Fig. 7, the narrow BPL of the traffic channel is blocked, and the wide BPL of the control channel can still be connected. As shown in Fig. 8, both the narrow BPL of the traffic channel and the wide BPL of the control channel are blocked. In this case, when the mobile terminal reports a request message or transmits a preamble, the request or the preamble may carry a first signaling and a second signaling, the first signaling is used to indicate initiating a beam recovery mechanism (for example, 1 bit used to indicate initiating), and the second signaling is used to indicate an optimal physical downlink control channel (Physical Downlink Control Channel, PDCCH) BPL and/or an optimal PDSCH BPL. That is, if the current wide BPL has a good quality enough for transmission, it can continue to be used. If the current wide BPL is uninterrupted but has a poor quality, or the current wide BPL is blocked, the request message needs to carry a message using another new BPL.

The network-side device indicates a new PDCCH beam and/or a new PDSCH beam to the mobile terminal according to the request message fed back by the mobile terminal. The new PDCCH beam may be the original wide BPL or a new wide BPL, and the new PDSCH beam may be another narrow BPL in the original wide BPL, or a narrow BPL in the new wide BPL.

In addition, the network-side device may also indicate the mobile terminal to initiate local beam training. For example, a total of three narrow beams are included in the wide BPL indicated by the network-side device, and the three narrow beams are transmitted by turns, that is, local beam training. The mobile terminal receives the transmitted narrow beams and feeds back the optimal narrow beam, thereby determining a new narrow BPL within the wide BPL. In the embodiment, the final new BPL is determined based on the indication of the network-side device, which can be faster and more accurate.

Reference is made to Fig. 13, which is a structural diagram of a network-side device according to embodiments of the present disclosure, which can implement details of the method for beam recovery processing in the foregoing embodiments, and achieve the same effect. As shown in Fig. 13, the network-side device 1300 includes an indication message transmitting module 1301 and a first communication switching module 1302. The indication message transmitting module 1301 is used to transmit a first indication message to a mobile terminal in response to meeting a preset trigger condition, where the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal. The first communication switching module 1302 is configured to switch to the new BPL for data transmission.

In some optional embodiments, the network-side device further includes: a first measurement module, configured to measure a first metric of the uplink reference signal; and a first determining module, configured to determine that the preset trigger condition is met, in a case that the first metric of the uplink reference signal meets a first preset condition.

In some optional embodiments, the first metric includes at least one of: a reference signal receiving power RSRP, and a reference signal receiving quality RSRQ, a signal to noise ratio SNR, a channel quality indicator CQI, or negative acknowledgement NACK in hybrid automatic repeat request acknowledgement (HARQ-ACK) information.

In some optional embodiments, in a case that the first metric includes at least one of a reference signal receiving power RSRP, a reference signal receiving quality RSRQ, a signal to noise ratio SNR, or a channel quality indicator CQI, the first preset condition includes that the number of occurrences of a case is greater than a first preset value, where the case is that a measurement result of the first metric is smaller than a corresponding preset threshold value. In a case that the first metric includes the negative acknowledgement NACK in the HARQ-ACK information, the first preset condition further includes that the number of the NACKs is greater than the first preset value in the preset time period.

In some optional embodiments, the network-side device further includes: a target data reception module, configured to receive target data that is transmitted, to the network-side device, by the mobile terminal according to the measurement result of a second metric of a downlink reference signal; and a second determining module, configured to determine whether the preset trigger condition is met based on the target data.

The target data is a random access preamble of a physical random access channel PRACH, or a request message transmitted by the mobile terminal to the network-side device.

In some optional embodiments, the request message carries at least one of a first signaling for indicating to initiate the beam recovery mechanism or a second signaling for indicating a BPL used for the beam recovery mechanism; or the preamble carries at least one of the first signaling or the second signaling.

In some optional embodiments, one bit in the first signaling is used to indicate whether to initiate the beam recovery mechanism.

In some optional embodiments, the preset number of bits in the second signaling is used to indicate the BPL used for the beam recovery mechanism that is monitored and identified by the mobile terminal.

In some optional embodiments, the request message is carried and transmitted on an uplink control channel, or transmitted by using a wide beam, or transmitted by using a plurality of narrow beams simultaneously.

In some optional embodiments, the second metric includes at least one of a reference signal receiving power RSRP, a reference signal receiving quality RSRQ, a signal to noise ratio SNR, a channel quality indicator CQI, or negative acknowledgement NACK in HARQ-ACK information.

In some optional embodiments, the network-side device further includes: a configuration transmitting module, configured to transmit a configuration of beam reporting to a mobile terminal after a successful random access procedure; a beam report reception module, configured to receive a beam report transmitted by the mobile terminal through beam training based on the configuration of the beam reporting; and a third determining module, configured to determine an optimal BPL for data transmission according to the beam report.

The optimal BPL includes one or more target BPLs, each of the target BPLs includes at least one of a control channel BPL for control channel transmission or a traffic channel BPL for traffic channel transmission, and all of the target BPLs include at least one of the control channel BPL and at least one of the traffic channel BPL.

In some optional embodiments, a manner of performing data transmission on the target BPLs includes at least one of: transmitting same information, using a same time-frequency resource, frequency division multiplexing FDM, time division multiplexing TDM, or code division multiplexing CDM.

In some optional embodiments, the indicating a new beam pair link BPL includes indicating a new traffic channel BPL.

In some optional embodiments, the indicating a new beam pair link BPL further includes: indicating a new control channel BPL.

The network-side device further includes a beam report reception module and a processing module. The indication message transmitting module is configured to transmit a second indication message to the mobile terminal, where the second indication message is configured to indicate initiating local beam training, and the local beam training is narrow beam training within an optimal control channel BPL. The beam report reception module is configured to receive a beam report for the narrow beam training fed back by the mobile terminal. The processing module is configured to determine an optimal narrow beam according to the beam report, and setting the optimal narrow beam as a new traffic channel BPL.

In such a manner, in the embodiments of the present disclosure, if the preset trigger condition is met, the network-side device transmits the first indication message to the mobile terminal, and switches to the new BPL for data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

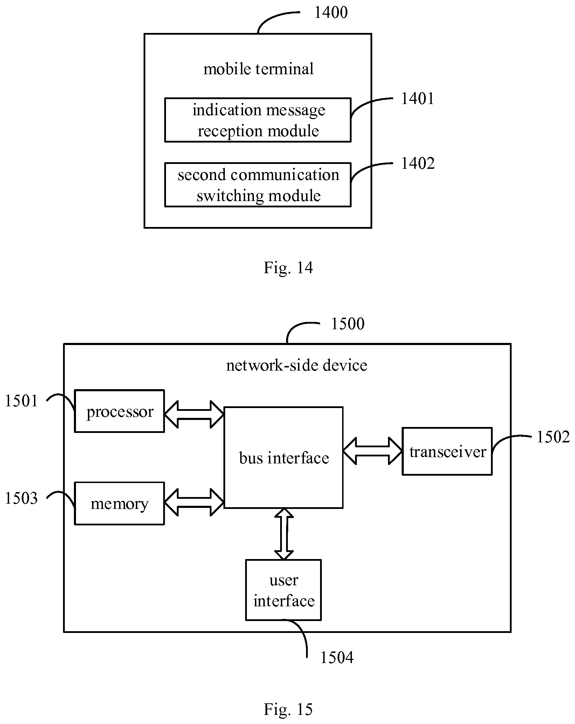

Reference is made to Fig. 14, which is a structural diagram of a mobile terminal according to embodiments of the present disclosure, which can implement details of the method for beam recovery processing in the foregoing embodiments, and achieve the same effect. As shown in Fig. 14, the mobile terminal 1400 includes an indication message reception module 1401 and a second communication switching module 1402. The indication message reception module is configured to receive a first indication message transmitted by a network-side device, where the first indication message is transmitted, in response to meeting a preset trigger condition, by the network-side device to the mobile terminal, the first indication message is used to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal. The second communication switching module is configured to switch to the new BPL according to the first indication message for data transmission.

In some optional embodiments, the mobile terminal further includes: a second measurement module, configured to measure a second metric of the downlink reference signal; and a target data transmitting module, configured to: transmit target data to the network-side device according to a measurement result of the second metric, in a case that the second metric of the downlink reference signal meets a second preset condition, where the target data is configured for the network-side device to determine whether the preset trigger condition is met.

The target data is a random access preamble of a physical random access channel PRACH, or a request message transmitted by the mobile terminal to the network-side device.

In some optional embodiments, the request message carries at least one of a first signaling used to indicate to initiate the beam recovery mechanism, or a second signaling used to indicate a BPL used for the beam recovery mechanism; or the preamble carries at least one of the first signaling or the second signaling.

In some optional embodiments, one bit in the first signaling is used to indicate whether to initiate the beam recovery mechanism.

In some optional embodiments, the preset number of bits in the second signaling is used to indicate the BPL used for the beam recovery mechanism that is monitored and identified by the mobile terminal.

In some optional embodiments, the request message is carried on an uplink control channel, or transmitted using a wide beam, or transmitted using a plurality of narrow beams simultaneously.

In some optional embodiments, the second metric includes at least one of a reference signal receiving power RSRP, a reference signal receiving quality RSRQ, a signal to noise ratio SNR, a channel quality indicator CQI, or negative acknowledgement NACK in HARQ-ACK information.

In a case that the second metric includes at least one of a reference signal receiving power RSRP, a reference signal receiving quality RSRQ, a signal to noise ratio SNR, or a channel quality indicator CQI, the second preset condition includes that the number of occurrences of a case is greater than a second preset value in a preset time period, wherein the case is that a measurement result of the second metric is smaller than a corresponding preset threshold value; or in a case that the second metric includes the negative acknowledgement NACK in the HARQ-ACK information, the second preset condition further comprises that the number of occurrences of the NACK is greater than the second preset value in the preset time period.

In some optional embodiments, the mobile terminal further includes: a configuration reception module, configured to receive a configuration of beam reporting transmitted by the network-side device; and a beam report transmitting module, configured to transmit a beam report of beam training to the network-side device based on the configuration of the beam reporting, where the beam report of the beam training is used by the network-side device to determine an optimal BPL for data transmission.

The optimal BPL includes one or more target BPLs, each of the target BPLs includes at least one of a control channel BPL for control channel transmission or a traffic channel BPL for traffic channel transmission, and all of the target BPLs include at least one of the control channel BPL and at least one of the traffic channel BPL.

In some optional embodiments, a manner of performing data transmission on the target BPLs includes at least one of: transmitting same information, using a same time-frequency resource, frequency division multiplexing FDM, time division multiplexing TDM, or code division multiplexing CDM.

In some optional embodiments, the indicating a new beam pair link BPL includes indicating a new traffic channel BPL.

In some optional embodiments, the indicating a new beam pair link BPL further includes: indicating a new control channel BPL.

In some optional embodiments, the mobile terminal further includes a beam report feedback module. The indication message reception module is further configured to receive a second indication message transmitted by the network-side device, where the second indication message is used to indicate initiating local beam training, and the local beam training is narrow beam training performed in the optimal control channel BPL. The beam report feedback module is configured to feed a beam report of the narrow beam training back to the network-side device, where the beam report is used by the network-side device to determine an optimal narrow beam and set the optimal narrow beam as a new traffic channel BPL.

Therefore, in the embodiments of the present disclosure, if the preset trigger condition is met, the mobile terminal receives the first indication message transmitted by the network-side device and switches to the new BPL according to the first indication message to perform data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

Reference is made to Fig. 15, which is a structural diagram of a network-side device according to embodiments of the present disclosure, which can implement the details of the method for beam recovery processing in some of the above embodiments, and achieve the same effect. As shown in Fig. 15, the network-side device 1500 includes: a processor 1501, a transceiver 1502, a memory 1503, a user interface 1504, and a bus interface. The processor 1501 is configured to read a program in the memory 1503 and perform the following processes: transmitting a first indication message to a mobile terminal in response to that a preset trigger condition is met, where the first indication message is configured to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal; and switching to the new BPL for data transmission.

In Fig. 15, the bus architecture may include an arbitrary quantity of buses and bridges connected to each other, which links various circuits such as one or multiple processors represented by the processor 1501, and memories represented by the memory 1503. The bus architecture may also link other circuits such as external equipment, a voltage stabilizer and a power management circuit, which is common knowledge in the art and therefore is not described in further detail in the present disclosure. The bus interface is configured to provide an interface. The transceiver 1502 may include multiple components, for example, including multiple receivers and transmitters, which provides units for communication with other apparatuses on a transmission medium. For different user equipment, the user interface 1504 may also be an interface capable of internally or externally connecting necessary devices, and the connected devices include, but not limited to, a keypad, a display, a speaker, a microphone, a joystick, and the like.

The processor 1501 is responsible for managing the bus architecture and general processing, and the memory 1503 may be configured to store data used by the processor 1501 when performing operations.

In some optional embodiments, the processor 1501 is further configured to: measure a first metric of the uplink reference signal; and determine that the preset trigger condition is met, in a case that the first metric of the uplink reference signal meets a first preset condition.

In some optional embodiments, the first metric includes at least one of a reference signal receiving power RSRP, a reference signal receiving quality RSRQ, a signal to noise ratio SNR, a channel quality indicator CQI, or negative acknowledgement NACK in HARQ-ACK information.

In some optional embodiments, in a case that the first metric includes at least one of a reference signal receiving power RSRP, a reference signal receiving quality RSRQ, a signal to noise ratio SNR, or a channel quality indicator CQI, the first preset condition includes that the number of occurrences of a case is greater than a first preset value, where the case is that a measurement result of the first metric is smaller than a corresponding preset threshold value. In a case that the first metric includes the negative acknowledgement NACK in the HARQ-ACK information, the first preset condition includes that the number of occurrences of the NACK is greater than the first preset value in the preset time period.

In some optional embodiments, the processor 1501 is further configured to: receive target data that is transmitted, to the network-side device, by the mobile terminal according to the measurement result of a second metric of the downlink reference signal; and determine whether a preset trigger condition is met based on the target data.

The target data is a random access preamble of a physical random access channel PRACH, or a request message transmitted by the mobile terminal to the network-side device.

In some optional embodiments, the request message carries at least one of a first signaling used to indicate to initiate the beam recovery mechanism or a second signaling used to indicate a BPL used for the beam recovery mechanism; or the preamble carries at least one of the first signaling or the second signaling.

In some optional embodiments, one bit in the first signaling is used to indicate whether to initiate the beam recovery mechanism.

In some optional embodiments, the preset number of bits in the second signaling is used to indicate the BPL used for the beam recovery mechanism that is monitored and identified by the mobile terminal.

In some optional embodiments, the request message is carried on an uplink control channel, or transmitted using a wide beam, or transmitted using a plurality of narrow beams simultaneously.

In some optional embodiments, the second metric includes at least one of a reference signal receiving power RSRP, a reference signal receiving quality RSRQ, a signal to noise ratio SNR, a channel quality indicator CQI, or negative acknowledgement information NACK in HARQ-ACK information.

In some optional embodiments, the processor 1501 is further configured to: transmit a configuration of beam reporting to a mobile terminal that accesses a network-side device by using a random access procedure; receive a beam report transmitted by the mobile terminal from beam training based on the configuration of the beam reporting; and determine an optimal BPL for data transmission according to the beam report.

The optimal BPL includes one or more target BPLs, each of the target BPLs includes at least one of a control channel BPL for control channel transmission or a traffic channel BPL for traffic channel transmission, and all of the target BPLs include at least one of the control channel BPL and at least one of the traffic channel BPL.

In some optional embodiments, a manner of performing data transmission on the target BPLs includes at least one of: transmitting same information, using a same time-frequency resource, frequency division multiplexing FDM, time division multiplexing TDM, or code division multiplexing CDM.

In some optional embodiments, the indicating the new beam pair link BPL includes: indicating a new traffic channel BPL.

In some optional embodiments, the indicating the new beam pair link BPL includes: indicating a new control channel BPL.

The processor 1501 is further configured to: transmit a second indication message to the mobile terminal, where the second indication message is configured to indicate initiating local beam training, and the local beam training includes performing narrow beam training within an optimal control channel BPL; receive a beam report of the narrow beam training fed back by the mobile terminal; and determine an optimal narrow beam according to the beam report, and set the optimal narrow beam as the new traffic channel BPL.

In the embodiments of the present disclosure, if the preset trigger condition is met, the network-side device transmits the first indication message to the mobile terminal, and switches to the new BPL for data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

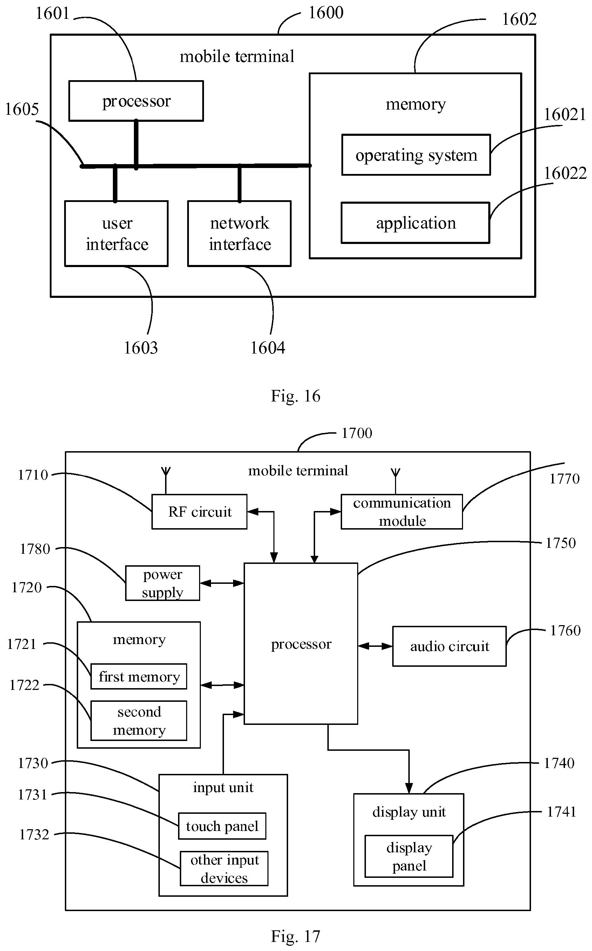

In some optional embodiments, reference is made to Fig. 16, which is a structural diagram of a network-side device according to the embodiments of the present disclosure, which can implement the details of the method for beam recovery processing in some of the above embodiments, and achieve the same effect. As shown in Fig. 16, the mobile terminal 1600 includes at least one processor 1601, a memory 1602, at least one network interface 1604, and a user interface 1603. Various components in mobile terminal 1600 are coupled together by a bus system 1605. It can be appreciated that the bus system 1605 is configured to implement connections and communications among these components. The bus system 1605 includes a power bus, a control bus, and a status signal bus, in addition to a data bus. However, for clarity of description, various buses are labeled as bus system 1605.

The user interface 1603 may include a display, a keyboard, or a pointing device, for example, a mouse, a track ball, a touch pad, or a touch screen, and the like.

It may be understood that the memory 1602 according to the embodiments of the present disclosure may be a volatile memory or a non-volatile memory, or include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) that acts as an external highspeed cache. By way of example but not limitation, many types of RAM are available, such as a static random access memory (Static RAM, SRAM), dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM) and a direct Rambus random access memory (Direct Rambus RAM, DRRAM). The memory 1602 used in the systems and methods described in the present disclosure is intended to include, but not limited to, these types of memory listed above and any other suitable types of memory.

In some embodiments, the memory 1602 stores the following elements: executable modules or data structures, or subsets of the executable modules or data structures, or extension sets of the executable modules or data structures such as an operating system 16021 and an application 16022.

The operating system 16021 includes a variety of system programs, such as a framework layer, a core library layer and a driver layer, for implementing various basis services and processing hardware-based tasks. The application 16022 includes various applications, such as a media player (Media Player) and a browser (Browser), for implementing various application services. The program for implementing the method according to the embodiments of the present disclosure may be included in the application 16022.

In an embodiment of the present disclosure, by calling a program or an instruction stored in the memory 1602, which is specifically a program or an instruction stored in the application 16022, the processor 1601 is configured to: receive a first indication message transmitted by a network-side device, where the first indication message is transmitted, in response to that a preset trigger condition is met, by the network-side device to the mobile terminal, the first indication message is configured to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal; and switching to the new BPL according to the first indication message for data transmission.

The method according to the above embodiments of the present disclosure may be applied to the processor 1601 or implemented by the processor 1601. The processor 1601 may be an integrated circuit chip with signal processing capabilities. In the implementation process, each step of the foregoing method may be performed by an integrated logic circuit in the processor 1601 in a form of hardware or performed by an instruction in a form of software. The processor 1601 may be a general-purpose processor, a digital signal processor (Digital Signal Processor, DSP), an application specific integrated circuit (Application Specific Integrated Circuit, ASIC), a field programmable gate array (Field Programmable Gate Array, FPGA), or other programmable logic components such as discrete gates, transistors, or discrete hardware components. The processor 1601 may be configured to implement or execute the methods, steps, or logical block diagrams according to the embodiments of the present disclosure. The general-purpose processor may be a micro-processor, or the processor may be other conventional processor. The steps of the method according to the embodiments of the present disclosure may be directly implemented by hardware of a decoding processor, or may be performed by a combination of hardware and software modules in the decoding processor. The software modules may be located in a storage medium well known in the art, such as a random access memory, a flash memory, a read only memory, a programmable read only memory or an electrically erasable programmable memory, a register. The storage medium is located in the memory 1602, and the processor 1601 is configured to read information in the memory 1602 and perform the steps of the above methods in combination with the hardware.

It can be appreciated that the embodiments described in the specification can be implemented in hardware, software, firmware, middleware, microcode, or a combination thereof. For hardware implementation, the processing unit can be implemented in one or more of: application specific integrated circuits (Application Specific Integrated Circuits, ASICs), a digital signal processing (Digital Signal Processing, DSP) device, a digital signal processing equipment device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, other electronic units for performing the functions described herein, or a combination thereof.

For a software implementation, the techniques described in the present specification can be implemented by modules (such as, procedures and functions) that are configured to perform the functions described herein. Software codes can be stored in memory and executed by the processor. The memory can be in the processor or in external of the processor.

In some optional embodiments, the processor 1601 is further configured to: measure a second metric of the downlink reference signal; and transmit target data to the network-side device according to a measurement result of the second metric, in a case that the second metric of the downlink reference signal meets a second preset condition, where the target data is configured for the network-side device to determine whether the preset trigger condition is met

The target data is a random access preamble of a physical random access channel PRACH, or a request message transmitted by the mobile terminal to the network-side device.

In some optional embodiments, the request message carries at least one of a first signaling used to indicate to initiate the beam recovery mechanism, or a second signaling used to indicate a BPL used in initiating the beam recovery mechanism; or the preamble carries at least one of the first signaling or the second signaling.

In some optional embodiments, one bit in the first signaling is used to indicate whether to initiate the beam recovery mechanism.

In some optional embodiments, the preset number of bits in the second signaling is used to indicate the BPL used for the beam recovery mechanism that is monitored and identified by the mobile terminal.

In some optional embodiments, the request message is carried on an uplink control channel, or transmitted using a wide beam, or transmitted simultaneously using a plurality of narrow beams.

In some optional embodiments, the second metric includes at least one of a reference signal receiving power RSRP, a reference signal receiving quality RSRQ, a signal to noise ratio SNR, a channel quality indicator CQI, or negative acknowledgement NACK in HARQ-ACK information.

In some optional embodiments, in a case that the second metric includes at least one of a reference signal receiving power RSRP, a reference signal receiving quality RSRQ, a signal to noise ratio SNR, or a channel quality indicator CQI, the second preset condition includes that the number of occurrences of a case is greater than a second preset value in a preset time period, wherein the case is that a measurement result of the second metric is smaller than a corresponding preset threshold value; or in a case that the second metric includes the negative acknowledgement NACK in the HARQ-ACK information, the second preset condition further comprises that the number of occurrences of the NACK is greater than the second preset value in the preset time period.

In some optional embodiments, the processor 1601 is further configured to: receive a configuration of beam reporting transmitted by the network-side device; and transmit, to the network-side device, a beam report of beam training based on the configuration of the beam reporting, where the beam report of the beam training is configured for the network-side device to determine an optimal BPL for data transmission.

The optimal BPL includes one or more target BPLs, each of the target BPLs includes at least one of a control channel BPL for control channel transmission or a traffic channel BPL for traffic channel transmission, and all of the target BPLs include at least one of the control channel BPL and at least one of the traffic channel BPL.

In some optional embodiments, the manner of performing data transmission on the target BPLs includes at least one of: transmitting same information, using a same time-frequency resource, frequency division multiplexing FDM, time division multiplexing TDM, or code division multiplexing CDM.

In some optional embodiments, the indicating the new beam pair link BPL includes: indicating a new traffic channel BPL.

In some optional embodiments, the indicating the new beam pair link BPL includes indicating a new control channel BPL.

In some optional embodiments, the processor 1601 is further configured to: receive receiving a second indication message transmitted by the network-side device, where the second indication message is configured to indicate to initiate local beam training, and the local beam training includes performing narrow beam training within an optimal control channel BPL; and feed a beam report of the narrow beam training back to the network-side device, where the beam report is configured for the network-side device to determine an optimal narrow beam and set the optimal narrow beam as the new traffic channel BPL.

In the embodiment of the present disclosure, the mobile terminal receives the first indication message transmitted by the network-side device and switches to the new BPL according to the first indication message to perform data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

Reference is made to Fig. 17, which is a structural diagram of a mobile terminal according to embodiments of the present disclosure, which can implement details of a method for beam recovery processing in some of the above embodiments, and achieve the same effect. As shown in Fig. 17, the mobile terminal 1700 includes a radio frequency (Radio Frequency, RF) circuit 1710, a memory 1720, an input unit 1730, a display unit 1740, a processor 1750, an audio circuit 1760, a communication module 1770, a power supply 1780, and a camera (not shown in the figure).

The input unit 1730 may be configured to receive numeric or character information inputted by the user, and generate signal input related to user settings and function control of the mobile terminal 1700. Specifically, in an embodiment of the present disclosure, the input unit 1730 may include a touch panel 1731. The touch panel 1731, also referred to as a touch screen, may collect touch operations (such as an operation performed by a user using any suitable object or accessory such as a finger or a stylus on the touch panel 1731) performed on or near the touch panel by a user, and drive a corresponding connection device according to a preset program. In some optional embodiments, the touch panel 1731 may include two parts: a touch detection device and a touch controller. The touch detection device detects a touch position of the user, detects a signal brought by the touch operation, and transmits the signal to the touch controller; and the touch controller receives the touch information from the touch detection device, converts the touch information into contact coordinates, transmits the contact coordinates to the processor 1750, and can receive and execute commands from the processor 1750. In addition, the touch panel 1731 can be implemented in various types such as resistive, capacitive, infrared, and surface acoustic waves. In addition to the touch panel 1731, the input unit 1730 may further include other input devices 1732. The other input devices 1732 may include, but not limited to, one or more of a physical keyboard, function buttons (such as a volume control button and a switch button), a trackball, a mouse, or a joystick.

The display unit 1740 can be configured to display information inputted by the user or information provided to the user, and various menu interfaces of the mobile terminal 1700. The display unit 1740 may include a display panel 1741. In some optional embodiments, the display panel 1741 may be configured in a form of a liquid crystal display LCD or an organic light-emitting diode (Organic Light-Emitting Diode, OLED).

It should be noted that the touch panel 1731 may cover the display panel 1741 to form a touch screen, and when the touch display screen detects a touch operation on or near it, the touch operation is transmitted to the processor 1750 to determine the type of the touch event, and then the processor 1750 provides a corresponding visual output on the touch screen according to the type of touch event.

The processor 1750 is a control center of the mobile terminal 1700, which connects various parts of the entire mobile phone by using various interfaces and wires, performs functions of the user equipment 1400 and process data by running or executing software programs and/or modules stored in the first memory 1721 and invoking data stored in the second memory 1722, thereby performing overall monitoring on the mobile terminal 1700. In some optional embodiments, the processor 1750 may include one or more processing units.

In an embodiment of the present disclosure, the processor 1750 is configured, by invoking the software programs and/or modules stored in the first memory 1721, and data stored in the second memory 1722, to: receive a first indication message transmitted by a network-side device, where the first indication message is transmitted, in response to that a preset trigger condition is met, by the network-side device to the mobile terminal, the first indication message is configured to indicate a new beam pair link BPL, and the preset trigger condition is that a beam recovery mechanism is determined to be initiated by the mobile terminal based on a measurement result of a downlink reference signal or a beam recovery mechanism is determined to be initiated by the network-side device based on a measurement result of an uplink reference signal; and switch to the new BPL according to the first indication message for data transmission.

In some optional embodiments, the processor 1750 is further configured to: measure a second metric of the downlink reference signal; and transmit target data to the network-side device according to a measurement result of the second metric, in a case that the second metric of the downlink reference signal meets a second preset condition, where the target data is configured for the network-side device to determine whether the preset trigger condition is met.

The target data is a random access preamble of a physical random access channel PRACH, or a request message transmitted by the mobile terminal to the network-side device.

In some optional embodiments, the request message carries at least one of a first signaling used to indicate to initiate the beam recovery mechanism, or a second signaling used to indicate a BPL used for the beam recovery mechanism; or the preamble carries at least one of the first signaling or the second signaling.

In some optional embodiments, one bit in the first signaling is used to indicate whether to initiate the beam recovery mechanism.

In some optional embodiments, the preset number of bits in the second signaling is used to indicate the BPL used for the beam recovery mechanism that is monitored and identified by the mobile terminal.

In some optional embodiments, the request message is carried on an uplink control channel, or transmitted using a wide beam, or transmitted simultaneously using a plurality of narrow beams.

In some optional embodiments, the second metric includes at least one of a reference signal receiving power RSRP, a reference signal receiving quality RSRQ, a signal to noise ratio SNR, a channel quality indicator CQI, or negative acknowledgement NACK in HARQ-ACK information.

In some optional embodiments, in a case that the second metric includes at least one of a reference signal receiving power RSRP, a reference signal receiving quality RSRQ, a signal to noise ratio SNR, or a channel quality indicator CQI, the second preset condition includes that the number of occurrences of a case is greater than a second preset value in a preset time period, wherein the case is that a measurement result of the second metric is smaller than a corresponding preset threshold value; or in a case that the second metric includes the negative acknowledgement NACK in the HARQ-ACK information, the second preset condition further comprises that the number of occurrences of the NACK is greater than the second preset value in the preset time period.

In some optional embodiments, the processor 1750 is further configured to: receive a configuration of beam reporting transmitted by the network-side device; and transmit, to the network-side device, a beam report of beam training based on the configuration of the beam reporting, where the beam report of the beam training is configured for the network-side device to determine an optimal BPL for data transmission.

The optimal BPL includes one or more target BPLs, each of the target BPLs includes at least one of a control channel BPL for control channel transmission or a traffic channel BPL for traffic channel transmission, and all of the target BPLs include at least one of the control channel BPL and at least one of the traffic channel BPL.

In some optional embodiments, the manner of performing data transmission on the target BPLs includes at least one of: transmitting same information, using a same time-frequency resource, frequency division multiplexing FDM, time division multiplexing TDM, or code division multiplexing CDM.

In some optional embodiments, the indicating the new beam pair link BPL includes: indicating a new traffic channel BPL.

In some optional embodiments, the indicating the new beam pair link BPL includes indicating a new control channel BPL.

In some optional embodiments, the processor 1750 is further configured to: receive a second indication message transmitted by the network-side device, where the second indication message is configured to indicate to initiate local beam training, and the local beam training includes performing narrow beam training within an optimal control channel BPL; and feed a beam report of the narrow beam training back to the network-side device, where the beam report is configured for the network-side device to determine an optimal narrow beam and set the optimal narrow beam as the new traffic channel BPL.

In the embodiment of the present disclosure, the mobile terminal receives the first indication message transmitted by the network-side device and switches to the new BPL according to the first indication message to perform data transmission, where the first indication message is used to indicate the new beam pair link BPL, and the preset trigger condition is that the beam recovery mechanism is determined to be initiated by the mobile terminal based on the measurement result of the downlink reference signal or determined to be initiated by the network-side device based on the measurement result of the uplink reference signal. Since the uplink reference signal or the downlink reference signal is measured to determine a link state, the network-side device transmits the first indication information to the mobile terminal when the link transmission quality deteriorates and the beam recovery mechanism needs to be initiated, and accordingly, the mobile terminal and the network side switch to the new BPL and perform data transmission thereon. The delay of beam recovery is reduced in the present disclosure, as compared with the related art that a high layer monitors a link state, initiates RRC reestablishment, performs beam training to find an optimal beam, and recovers data transmission.

Those skilled in the art can appreciate that the units and algorithm steps of the various examples described in conjunction with the embodiments according to the present disclosure can be implemented in the form of electronic hardware or a combination of computer software and electronic hardware. Whether these functions are performed in hardware or software depends on the specific application and design constraints of the technical solution. Those skilled in the art can use different methods to implement the described functions for each particular application, but such implementation should not be considered as beyond the scope of the present disclosure.

Those skilled in the art can clearly understand that for convenience and brevity of description, reference can be made to the corresponding processes in the foregoing method embodiment for specific operating processes of the system, the device and the units described above, which is not described herein redundantly.

It should be understood that in the embodiments according to the present disclosure, the disclosed devices and methods may be implemented in other manners. For example, the device embodiments described above are merely illustrative. For example, the division of the units is only a logical function division, and in practical implementation, there may be another manner of division. For example, multiple units or components may be combined or integrated into another system, or some features can be ignored or not implemented. In addition, the mutual coupling or direct coupling, or communication connection as shown or discussed may be implemented through some interfaces, and indirect coupling or communication connection between devices or units may be electrical, mechanical or in other forms.

The units described as separate components may or may not be physically separated, and the components shown as units may or may not be physical units, that is, they may be located in one place or distributed to multiple network units. Some or all of the units may be selected according to practical needs to achieve the objective of the technical solutions of the embodiments of the present disclosure.

In addition, functional units in various embodiments of the present disclosure may be integrated into one processing unit, or each unit may exist physically and separately, or two or more units may be integrated into one unit.

In a case that the functions are implemented in the form of a software functional unit which is sold or used as a standalone product, the product may be stored in a computer readable storage medium. Based on such understanding, the essence or the portion of the technical solutions of the present disclosure that contributes to the prior art may be embodied in the form of a software product. The computer software product is stored in a storage medium, which includes instructions that cause a computer device (which may be a personal computer, a server or a network device) to perform all or part of steps of the methods in various embodiments of the present disclosure. The foregoing storage medium may include any storage medium that is able to store program codes, such as a USB flash drive, a mobile hard disk, an ROM, an RAM, a magnetic disk, or an optical disk.

The specific embodiments of the present disclosure are described above, but the protection scope of the present disclosure is not limited hereto. Any changes or substitutions made by those skilled in the art within the technical scopes of the present disclosure shall fall within the protection scope of the present disclosure. Therefore, the protection scope of the present disclosure should be defined by the claims.

## Claims

1. A method for beam recovery processing, comprising:
transmitting (101), by a network-side device, a first indication message to a mobile terminal in response to that a preset trigger condition is met, wherein the first indication message is used to indicate a new beam pair link, BPL, and the preset trigger condition comprises that a beam recovery mechanism is determined to be initiated by the mobile terminal based on a measurement result of a downlink reference signal; and
switching (102) to the new BPL for data transmission,
wherein:
before transmitting (101), by the network-side device, the first indication message to the mobile terminal, the method further comprises:
receiving (105) target data that is transmitted, to the network-side device, by the mobile terminal according to the measurement result of a second metric of the downlink reference signal, in a case that the second metric of the downlink reference signal meets a second preset condition; and
determining (106) whether the preset trigger condition is met based on the target data, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value,
wherein before transmitting, by the network-side device, the first indication message to the mobile terminal in response to that the preset trigger condition is met, the method further comprises:
transmitting a configuration of beam reporting to the mobile terminal after a successful random access procedure;
receiving a beam report transmitted by the mobile terminal through beam training based on the configuration of the beam reporting; and
determining an optimal BPL for data transmission based on the beam report,
wherein the optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
wherein the indicating the new BPL comprises: indicating a new traffic channel BPL, and before transmitting, by the network-side device, the first indication message to the mobile terminal, the method further comprises:
transmitting (501) a second indication message to the mobile terminal, wherein the second indication message is used to indicate initiating local beam training, and the local beam training comprises performing narrow beam training within an optimal control channel BPL;
receiving (502) a beam report of the narrow beam training fed back by the mobile terminal; and
determining (503) an optimal narrow beam based on the beam report, and setting the optimal narrow beam as the new traffic channel BPL.

2. The method according to claim 1, wherein the request message carries at least one of a first signaling for indicating to initiate the beam recovery mechanism or a second signaling for indicating a BPL used for the beam recovery mechanism; or
the preamble carries at least one of the first signaling or the second signaling.

3. The method according to claim 2, wherein one bit in the first signaling is used to indicate whether to initiate the beam recovery mechanism; and/or
the preset number of bits in the second signaling is used to indicate the BPL used for the beam recovery mechanism that is monitored and identified by the mobile terminal; and/or
the request message is carried on an uplink control channel, or transmitted by using a wide beam, or transmitted by using a plurality of narrow beams simultaneously.

4. A method for beam recovery processing, comprising:
receiving (901), by a mobile terminal, a first indication message transmitted by a network-side device, wherein the first indication message is transmitted, in response to that a preset trigger condition is met, by the network-side device to the mobile terminal, the first indication message is used to indicate a new beam pair link, BPL, and the preset trigger condition comprises that a beam recovery mechanism is determined to be initiated by the mobile terminal based on a measurement result of a downlink reference signal; and
switching (902) to the new BPL according to the first indication message for data transmission,
wherein:
before receiving (901), by the mobile terminal, the first indication message transmitted by the network-side device, the method further comprises:
measuring (903) a second metric of the downlink reference signal; and
transmitting (904) target data to the network-side device according to a measurement result of the second metric, in a case that the second metric of the downlink reference signal meets a second preset condition, wherein the target data is configured for the network-side device to determine whether the preset trigger condition is met, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value,
wherein before receiving, by the mobile terminal, the first indication message transmitted by the network-side device, the method further comprises:
receiving a configuration of beam reporting transmitted by the network-side device; and
transmitting, to the network-side device, a beam report through beam training based on the configuration of the beam reporting, wherein the beam report through beam training is used for the network-side device to determine an optimal BPL for data transmission,
wherein the optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
wherein the indicating the new BPL comprises: indicating a new traffic channel BPL, and before receiving, by the mobile terminal, the first indication message transmitted by the network-side device, the method further comprises:
receiving a second indication message transmitted by the network-side device, wherein the second indication message is used to indicate to initiate local beam training, and the local beam training comprises performing narrow beam training within an optimal control channel BPL; and
feeding a beam report of the narrow beam training back to the network-side device, wherein the beam report is configured for the network-side device to determine an optimal narrow beam and set the optimal narrow beam as the new traffic channel BPL.

5. The method according to claim 4, wherein the request message carries at least one of a first signaling for indicating to initiate the beam recovery mechanism, or a second signaling for indicating a BPL used for the beam recovery mechanism; or
the preamble carries at least one of the first signaling or the second signaling.

6. The method according to claim 5, wherein one bit in the first signaling is used to indicate whether to initiate the beam recovery mechanism; and/or
the preset number of bits in the second signaling is used to indicate the BPL used for the beam recovery mechanism that is monitored and identified by the mobile terminal; and/or
the request message is carried on an uplink control channel, or transmitted by using a wide beam, or transmitted by using a plurality of narrow beams simultaneously.

7. A network-side device, comprising:
an indication message transmitting module (1301), configured to transmit a first indication message to a mobile terminal in response to that a preset trigger condition is met, wherein the first indication message is used to indicate a new beam pair link BPL, and the preset trigger condition comprises that a beam recovery mechanism is determined to be initiated by the mobile terminal based on a measurement result of a downlink reference signal; and
a first communication switching module (1302), configured to switch to the new BPL for data transmission,
wherein: the network-side device further comprises:
a target data reception module, configured to receive target data that is transmitted, to the network-side device, by the mobile terminal according to the measurement result of a second metric of the downlink reference signal, in a case that the second metric of the downlink reference signal meets a second preset condition; and
a second determining module, configured to determine whether the preset trigger condition is met based on the target data, wherein the target data is a random access preamble of a physical random access channel, PRACH, or a request message transmitted by the mobile terminal to the network-side device;
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value,
wherein the network-side device further comprises:
a configuration transmitting module, configured to transmit a configuration of beam reporting to a mobile terminal after a successful random access procedure;
a beam report reception module, configured to receive a beam report transmitted by the mobile terminal through beam training based on the configuration of the beam reporting; and
a third determining module, configured to determine an optimal BPL for data transmission based on the beam report,
wherein the optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
wherein the new BPL comprises: a new traffic channel BPL, and the network-side device further comprises a processing module,
wherein the indication message transmitting module (1301) is configured to transmit a second indication message to the mobile terminal before transmitting the first indication message to the mobile terminal, wherein the second indication message is used to indicate initiating local beam training, and the local beam training comprises performing narrow beam training within an optimal control channel BPL;
the beam report reception module is configured to receive a beam report of the narrow beam training fed back by the mobile terminal; and
the processing module is configured to determine an optimal narrow beam based on the beam report, and set the optimal narrow beam as the new traffic channel BPL.

8. The network-side device according to claim 7, wherein the request message carries at least one of a first signaling for indicating to initiate the beam recovery mechanism or a second signaling for indicating a BPL used for the beam recovery mechanism; or
the preamble carries at least one of the first signaling or the second signaling.

9. The network-side device according to claim 8, wherein one bit in the first signaling is used to indicate whether to initiate the beam recovery mechanism; and/or
the preset number of bits in the second signaling is used to indicate the BPL used for the beam recovery mechanism that is monitored and identified by the mobile terminal; and/or
the request message is carried on an uplink control channel, or transmitted by using a wide beam, or transmitted by using a plurality of narrow beams simultaneously.

10. A mobile terminal, comprising:
an indication message reception module (1401), configured to receive a first indication message transmitted by a network-side device, wherein the first indication message is transmitted, in response to that a preset trigger condition is met, by the network-side device to the mobile terminal, the first indication message is used to indicate a new beam pair link BPL, and the preset trigger condition comprises that a beam recovery mechanism is determined to be initiated by the mobile terminal based on a measurement result of a downlink reference signal; and
a second communication switching module (1402), configured to switch to the new BPL according to the first indication message for data transmission,
wherein:
the mobile terminal further comprises:
a second measurement module, configured to measure a second metric of the downlink reference signal; and
a target data transmitting module, configured to transmit target data to the network-side device according to a measurement result of the second metric, in a case that the second metric of the downlink reference signal meets a second preset condition, wherein the target data is configured for the network-side device to determine whether the preset trigger condition is met, wherein the target data is a random access preamble of a physical random access channel, PRACH, or a request message transmitted by the mobile terminal to the network-side device,
in a case that the second metric comprises at least one of a reference signal receiving power, RSRP, a reference signal receiving quality, RSRQ, a signal to noise ratio, SNR, or a channel quality indicator, CQI, the second preset condition comprises that the number of occurrences of a case is greater than a second preset value in a preset time period, wherein the case is that a measurement result of the second metric is smaller than a corresponding preset threshold value,
wherein the mobile terminal further comprises:
a configuration receiving module, configured to receive a configuration of beam reporting transmitted by the network-side device; and
a beam report transmitting module, configured to transmit, to the network-side device, a beam report through beam training based on the configuration of the beam reporting, wherein the beam report through the beam training is used for the network-side device to determine an optimal BPL for data transmission, wherein the optimal BPL comprises one or more target BPLs, each of the target BPLs comprises at least one of a control channel BPL for control channel transmission or a traffic channel BPL for traffic channel transmission, and all of the target BPLs comprise at least one of the control channel BPL and at least one of the traffic channel BPL,
wherein the new BPL comprises: a new traffic channel BPL, and the mobile terminal further comprises a beam report feedback module,
wherein the indication message reception module (1401) is further configured to receive a second indication message transmitted by the network-side device before receiving the first indication message transmitted by the network-side device, wherein the second indication message is used to indicate to initiate local beam training, and the local beam training comprises performing narrow beam training within an optimal control channel BPL; and
the beam report feedback module is configured to feed a beam report of the narrow beam training back to the network-side device, wherein the beam report is used for the network-side device to determine an optimal narrow beam and set the optimal narrow beam as the new traffic channel BPL.

11. The mobile terminal according to claim 10, wherein the request message carries at least one of a first signaling for indicating to initiate the beam recovery mechanism, or a second signaling for indicating a BPL used for the beam recovery mechanism; or
the preamble carries at least one of the first signaling or the second signaling.

12. The mobile terminal according to claim 11, wherein one bit in the first signaling is used to indicate whether to initiate the beam recovery mechanism; and/or
the preset number of bits in the second signaling is used to indicate the BPL used for the beam recovery mechanism that is monitored and identified by the mobile terminal; and/or
the request message is carried on an uplink control channel, or transmitted by using a wide beam, or transmitted by using a plurality of narrow beams simultaneously.

13. A computer readable storage medium, wherein a computer program is stored thereon, and the computer program, when executed by a processor of a network-side device, cause the network-side device to perform steps of the method for beam recovery processing according to any one of claims 1 to 3, or when executed by a processor of a mobile terminal, cause the mobile terminal to perform steps of the method for beam recovery processing according to any one of claims 4 to 6.

## Patentansprüche

1. Verfahren zur Strahlwiederherstellungsverarbeitung, umfassend:
Übertragen (101), durch eine netzwerkseitige Vorrichtung, einer ersten Anzeigenachricht an ein mobiles Endgerät als Reaktion darauf, dass eine voreingestellte Auslösebedingung erfüllt ist, wobei die erste Anzeigenachricht verwendet wird, um eine neue Strahlpaarverbindung, BPL, anzuzeigen, und die voreingestellte Auslösebedingung umfasst, dass bestimmt wird, dass ein Strahlwiederherstellungsmechanismus durch das mobile Endgerät basierend auf einem Messergebnis eines Downlink-Referenzsignals initiiert wird; und
Umschalten (102) auf die neue BPL zur Datenübertragung, wobei:
vor dem Übertragen (101), durch die netzwerkseitige Vorrichtung, der ersten Anzeigenachricht an das mobile Endgerät, das Verfahren ferner umfasst:
Empfangen (105) von Zieldaten, die durch das mobile Endgerät gemäß dem Messergebnis einer zweiten Metrik des Downlink-Referenzsignals an die netzwerkseitige Vorrichtung übertragen werden, falls die zweite Metrik des Downlink-Referenzsignals eine zweite voreingestellte Bedingung erfüllt; und
Bestimmen (106), ob die voreingestellte Auslösebedingung erfüllt ist, basierend auf den Zieldaten, wobei die Zieldaten eine Direktzugriffspräambel eines physikalischen Direktzugriffskanals, PRACH, oder eine durch das mobile Endgerät an die netzwerkseitige Vorrichtung übertragene Anforderungsnachricht sind,
falls die zweite Metrik mindestens eines von einer Referenzsignalempfangsleistung, RSRP, einer Referenzsignalempfangsqualität, RSRQ, einem Signal-Rausch-Verhältnis, SNR, oder einem Kanalqualitätsindikator, CQI, umfasst, die zweite voreingestellte Bedingung umfasst, dass die Anzahl des Auftretens eines Falls größer als ein zweiter voreingestellter Wert in einem voreingestellten Zeitraum ist, wobei der Fall ist, dass ein Messergebnis der zweiten Metrik kleiner als ein entsprechender voreingestellter Schwellenwert ist,
wobei vor dem Übertragen, durch die netzwerkseitige Vorrichtung, der ersten Anzeigenachricht an das mobile Endgerät als Reaktion darauf, dass die voreingestellte Auslösebedingung erfüllt ist, das Verfahren ferner umfasst:
Übertragen einer Konfiguration der Strahlberichterstattung an das mobile Endgerät nach einem erfolgreichen Direktzugriffsvorgang;
Empfangen eines Strahlberichts, der durch das mobile Endgerät durch Strahltraining basierend auf der Konfiguration der Strahlberichterstattung übertragen wird; und
Bestimmen einer optimalen BPL zur Datenübertragung basierend auf dem Strahlbericht,
wobei die optimale BPL eine oder mehrere Ziel-BPLs aufweist, jede der Ziel-BPLs mindestens eines von einer Steuerkanal-BPL zur Steuerkanalübertragung oder einer Verkehrskanal-BPL zur Verkehrskanalübertragung aufweist und alle der Ziel-BPLs mindestens eines von der Steuerkanal-BPL und mindestens eines von der Verkehrskanal-BPL aufweisen,
wobei das Anzeigen der neuen BPL aufweist: Anzeigen einer neuen Verkehrskanal-BPL, und vor dem Übertragen, durch die netzwerkseitige Vorrichtung, der ersten Anzeigenachricht an das mobile Endgerät, das Verfahren ferner umfasst:
Übertragen (501) einer zweiten Anzeigenachricht an das mobile Endgerät, wobei die zweite Anzeigenachricht verwendet wird, um das Einleiten eines lokalen Strahltrainings anzuzeigen, und das lokale Strahltraining das Durchführen eines schmalen Strahltrainings innerhalb einer optimalen Steuerkanal-BPL aufweist;
Empfangen (502) eines Strahlberichts des schmalen Strahltrainings, der durch das mobile Endgerät zurückgemeldet wird; und
Bestimmen (503) eines optimalen schmalen Strahls basierend auf dem Strahlbericht und Einstellen des optimalen schmalen Strahls als die neue Verkehrskanal-BPL.

2. Verfahren nach Anspruch 1, wobei die Anforderungsnachricht zumindest eines einer ersten Signalisierung zum Anzeigen, den Strahlwiederherstellungsmechanismus einzuleiten, und/oder einer zweiten Signalisierung zum Anzeigen einer BPL, die für den Strahlwiederherstellungsmechanismus verwendet wird, trägt; oder
die Präambel zumindest eines der ersten Signalisierung oder der zweiten Signalisierung trägt.

3. Verfahren nach Anspruch 2, wobei ein Bit in der ersten Signalisierung verwendet wird, um anzuzeigen, ob der Strahlwiederherstellungsmechanismus einzuleiten ist; und/oder
die voreingestellte Anzahl von Bits in der zweiten Signalisierung verwendet wird, um die BPL anzuzeigen, die für den Strahlwiederherstellungsmechanismus verwendet wird, der durch das mobile Endgerät überwacht und identifiziert wird; und/oder
die Anforderungsnachricht auf einem Uplink-Steuerkanal getragen wird oder unter Verwendung eines breiten Strahls übertragen wird oder unter Verwendung mehrerer schmaler Strahlen gleichzeitig übertragen wird.

4. Verfahren zur Strahlwiederherstellungsverarbeitung, umfassend:
Empfangen (901), durch ein mobiles Endgerät, einer ersten Anzeigenachricht, die durch eine netzwerkseitige Vorrichtung übertragen wird, wobei die erste Anzeigenachricht als Reaktion darauf, dass eine voreingestellte Auslösebedingung erfüllt ist, durch die netzwerkseitige Vorrichtung an das mobile Endgerät übertragen wird, die erste Anzeigenachricht verwendet wird, um eine neue Strahlpaarverbindung, BPL, anzuzeigen, und die voreingestellte Auslösebedingung umfasst, dass bestimmt wird, dass ein Strahlwiederherstellungsmechanismus durch das mobile Endgerät basierend auf einem Messergebnis eines Downlink-Referenzsignals initiiert wird; und
Umschalten (902) auf die neue BPL gemäß der ersten Anzeigenachricht zur Datenübertragung, wobei:
vor dem Empfangen (901), durch das mobile Endgerät, der ersten Anzeigenachricht, die durch die netzwerkseitige Vorrichtung übertragen wird, das Verfahren ferner umfasst:
Messen (903) einer zweiten Metrik des Downlink-Referenzsignals; und
Übertragen (904) von Zieldaten an die netzwerkseitige Vorrichtung gemäß einem Messergebnis der zweiten Metrik, falls die zweite Metrik des Downlink-Referenzsignals eine zweite voreingestellte Bedingung erfüllt, wobei die Zieldaten für die netzwerkseitige Vorrichtung eingerichtet sind, um zu bestimmen, ob die voreingestellte Auslösebedingung erfüllt ist, wobei die Zieldaten eine Direktzugriffspräambel eines physikalischen Direktzugriffskanals, PRACH, oder eine durch das mobile Endgerät an die netzwerkseitige Vorrichtung übertragene Anforderungsnachricht sind,
falls die zweite Metrik mindestens eines von einer Referenzsignalempfangsleistung, RSRP, einer Referenzsignalempfangsqualität, RSRQ, einem Signal-Rausch-Verhältnis, SNR, oder einem Kanalqualitätsindikator, CQI, aufweist, die zweite voreingestellte Bedingung aufweist, dass die Anzahl des Auftretens eines Falls größer als ein zweiter voreingestellter Wert in einem voreingestellten Zeitraum ist, wobei der Fall ist, dass ein Messergebnis der zweiten Metrik kleiner als ein entsprechender voreingestellter Schwellenwert ist,
wobei vor dem Empfangen, durch das mobile Endgerät, der ersten Anzeigenachricht, die durch die netzwerkseitige Vorrichtung übertragen wird, das Verfahren ferner umfasst:
Empfangen einer Konfiguration der Strahlberichterstattung, die durch die netzwerkseitige Vorrichtung übertragen wird; und
Übertragen, an die netzwerkseitige Vorrichtung, eines Strahlberichts durch Strahltraining basierend auf der Konfiguration der Strahlberichterstattung, wobei der Strahlbericht durch Strahltraining für die netzwerkseitige Vorrichtung verwendet wird, um eine optimale BPL zur Datenübertragung zu bestimmen,
wobei die optimale BPL eine oder mehrere Ziel-BPLs aufweist, jede der Ziel-BPLs mindestens eines von einer Steuerkanal-BPL zur Steuerkanalübertragung oder einer Verkehrskanal-BPL zur Verkehrskanalübertragung aufweist und alle der Ziel-BPLs mindestens eines von der Steuerkanal-BPL und mindestens eines von der Verkehrskanal-BPL aufweisen,
wobei das Anzeigen der neuen BPL Folgendes umfasst: Anzeigen einer neuen Verkehrskanal-BPL, und das Verfahren vor dem Empfangen, durch das mobile Endgerät, der ersten Anzeigenachricht, die durch die netzseitige Vorrichtung gesendet wird, ferner Folgendes umfasst:
Empfangen einer zweiten Anzeigenachricht, die durch die netzseitige Vorrichtung gesendet wird, wobei die zweite Anzeigenachricht verwendet wird, um anzuzeigen, ein lokales Strahltraining einzuleiten, und das lokale Strahltraining ein Durchführen eines schmalen Strahltrainings innerhalb einer optimalen Steuerkanal-BPL umfasst; und
Rückmelden eines Strahlberichts des schmalen Strahltrainings an die netzseitige Vorrichtung, wobei der Strahlbericht für die netzseitige Vorrichtung eingerichtet ist, einen optimalen schmalen Strahl zu bestimmen und den optimalen schmalen Strahl als die neue Verkehrskanal-BPL einzustellen.

5. Verfahren nach Anspruch 4, wobei die Anforderungsnachricht zumindest eines einer ersten Signalisierung zum Anzeigen, den Strahlwiederherstellungsmechanismus einzuleiten, und/oder einer zweiten Signalisierung zum Anzeigen einer BPL, die für den Strahlwiederherstellungsmechanismus verwendet wird, trägt; oder
die Präambel zumindest eines der ersten Signalisierung oder der zweiten Signalisierung trägt.

6. Verfahren nach Anspruch 5, wobei ein Bit in der ersten Signalisierung verwendet wird, um anzuzeigen, ob der Strahlwiederherstellungsmechanismus einzuleiten ist; und/oder
die voreingestellte Anzahl von Bits in der zweiten Signalisierung verwendet wird, um die BPL anzuzeigen, die für den Strahlwiederherstellungsmechanismus verwendet wird, der durch das mobile Endgerät überwacht und identifiziert wird; und/oder
die Anforderungsnachricht auf einem Uplink-Steuerkanal getragen wird oder unter Verwendung eines breiten Strahls gesendet wird oder unter Verwendung mehrerer schmaler Strahlen gleichzeitig gesendet wird.

7. Netzseitige Vorrichtung, mit:
einem Anzeigenachrichten-Sendemodul (1301), das eingerichtet ist, eine erste Anzeigenachricht an ein mobiles Endgerät in Reaktion darauf zu senden, dass eine voreingestellte Auslösebedingung erfüllt ist, wobei die erste Anzeigenachricht verwendet wird, um eine neue Strahlpaarverbindung BPL anzuzeigen, und die voreingestellte Auslösebedingung aufweist, dass bestimmt wird, dass ein Strahlwiederherstellungsmechanismus durch das mobile Endgerät basierend auf einem Messergebnis eines Downlink-Referenzsignals eingeleitet wird; und
einem ersten Kommunikationsschaltmodul (1302), das eingerichtet ist, auf die neue BPL zur Datenübertragung zu schalten,
wobei: die netzseitige Vorrichtung ferner Folgendes aufweist:
ein Zieldaten-Empfangsmodul, das eingerichtet ist, Zieldaten zu empfangen, die an die netzseitige Vorrichtung durch das mobile Endgerät gemäß dem Messergebnis einer zweiten Metrik des Downlink-Referenzsignals gesendet werden, falls die zweite Metrik des Downlink-Referenzsignals eine zweite voreingestellte Bedingung erfüllt; und
ein zweites Bestimmungsmodul, das eingerichtet ist, basierend auf den Zieldaten zu bestimmen, ob die voreingestellte Auslösebedingung erfüllt ist, wobei die Zieldaten eine Direktzugriffspräambel eines physikalischen Direktzugriffskanals, PRACH, oder eine Anforderungsnachricht sind, die durch das mobile Endgerät an die netzseitige Vorrichtung gesendet wird;
falls die zweite Metrik mindestens eines von einer Referenzsignalempfangsleistung, RSRP, und/oder einer Referenzsignalempfangsqualität, RSRQ, und/oder einem Signal-Rausch-Verhältnis, SNR, und/oder einem Kanalqualitätsindikator, CQI, aufweist, die zweite voreingestellte Bedingung aufweist, dass die Anzahl des Auftretens eines Falls größer als ein zweiter voreingestellter Wert in einer voreingestellten Zeitperiode ist, wobei der Fall ist, dass ein Messergebnis der zweiten Metrik kleiner als ein entsprechender voreingestellter Schwellenwert ist,
wobei die netzseitige Vorrichtung ferner Folgendes aufweist:
ein Konfigurationssendemodul, das eingerichtet ist, eine Konfiguration einer Strahlmeldung an ein mobiles Endgerät nach einer erfolgreichen Direktzugriffsprozedur zu senden;
ein Strahlmeldungsempfangsmodul, das eingerichtet ist, eine Strahlmeldung zu empfangen, die durch das mobile Endgerät durch Strahltraining basierend auf der Konfiguration der Strahlmeldung gesendet wird; und
ein drittes Bestimmungsmodul, das eingerichtet ist, eine optimale BPL zur Datenübertragung basierend auf der Strahlmeldung zu bestimmen,
wobei die optimale BPL eine oder mehrere Ziel-BPLs aufweist, jede der Ziel-BPLs zumindest eine von einer Steuerkanal-BPL zur Steuerkanalübertragung oder einer Verkehrskanal-BPL zur Verkehrskanalübertragung aufweist, und alle der Ziel-BPLs zumindest eine der Steuerkanal-BPL und zumindest eine der Verkehrskanal-BPL aufweisen,
wobei die neue BPL Folgendes aufweist: eine neue Verkehrskanal-BPL, und die netzseitige Vorrichtung ferner ein Verarbeitungsmodul aufweist,
wobei das Anzeigenachricht-Sendemodul (1301) eingerichtet ist, eine zweite Anzeigenachricht an das mobile Endgerät zu senden, bevor die erste Anzeigenachricht an das mobile Endgerät gesendet wird, wobei die zweite Anzeigenachricht verwendet wird, um anzuzeigen, ein lokales Strahltraining einzuleiten, und das lokale Strahltraining ein Durchführen eines schmalen Strahltrainings innerhalb einer optimalen Steuerkanal-BPL umfasst;
das Strahlmeldungsempfangsmodul eingerichtet ist, eine Strahlmeldung des schmalen Strahltrainings zu empfangen, die durch das mobile Endgerät zurückgemeldet wird; und
das Verarbeitungsmodul eingerichtet ist, einen optimalen schmalen Strahl basierend auf der Strahlmeldung zu bestimmen und den optimalen schmalen Strahl als die neue Verkehrskanal-BPL einzustellen.

8. Netzseitige Vorrichtung nach Anspruch 7, wobei die Anforderungsnachricht mindestens eines von einer ersten Signalisierung zum Anzeigen, den Strahlwiederherstellungsmechanismus einzuleiten, und/oder einer zweiten Signalisierung zum Anzeigen einer BPL, die für den Strahlwiederherstellungsmechanismus verwendet wird, trägt; oder
die Präambel zumindest eines der ersten Signalisierung oder der zweiten Signalisierung trägt.

9. Netzseitige Vorrichtung nach Anspruch 8, wobei ein Bit in der ersten Signalisierung verwendet wird, um anzuzeigen, ob der Strahlwiederherstellungsmechanismus einzuleiten ist; und/oder
die voreingestellte Anzahl von Bits in der zweiten Signalisierung verwendet wird, um die BPL anzuzeigen, die für den Strahlwiederherstellungsmechanismus verwendet wird, der durch das mobile Endgerät überwacht und identifiziert wird; und/oder
die Anforderungsnachricht auf einem Uplink-Steuerkanal getragen wird oder unter Verwendung eines breiten Strahls gesendet wird oder unter Verwendung mehrerer schmaler Strahlen gleichzeitig gesendet wird.

10. Mobiles Endgerät, mit:
einem Anzeigenachrichten-Empfangsmodul (1401), das eingerichtet ist, eine erste Anzeigenachricht zu empfangen, die durch eine netzseitige Vorrichtung gesendet wird, wobei die erste Anzeigenachricht in Reaktion darauf, dass eine voreingestellte Auslösebedingung erfüllt ist, durch die netzseitige Vorrichtung an das mobile Endgerät gesendet wird, die erste Anzeigenachricht verwendet wird, um eine neue Strahlpaarverbindung **BPL** anzuzeigen, und die voreingestellte Auslösebedingung aufweist, dass bestimmt wird, dass ein Strahlwiederherstellungsmechanismus durch das mobile Endgerät basierend auf einem Messergebnis eines Downlink-Referenzsignals eingeleitet wird; und
einem zweiten Kommunikationsschaltmodul (1402), das eingerichtet ist, auf die neue **BPL** gemäß der ersten Anzeigenachricht zur Datenübertragung zu schalten,
wobei: das mobile Endgerät ferner Folgendes aufweist:
ein zweites Messmodul, das eingerichtet ist, eine zweite Metrik des Downlink-Referenzsignals zu messen; und
ein Zieldaten-Sendemodul, das eingerichtet ist, Zieldaten an die netzseitige Vorrichtung gemäß einem Messergebnis der zweiten Metrik zu senden, falls die zweite Metrik des Downlink-Referenzsignals eine zweite voreingestellte Bedingung erfüllt, wobei die Zieldaten für die netzseitige Vorrichtung eingerichtet sind, zu bestimmen, ob die voreingestellte Auslösebedingung erfüllt ist, wobei die Zieldaten eine Direktzugriffspräambel eines physikalischen Direktzugriffskanals, PRACH, oder eine Anforderungsnachricht sind, die durch das mobile Endgerät an die netzseitige Vorrichtung gesendet wird,
falls die zweite Metrik mindestens eines von einer Referenzsignalempfangsleistung, RSRP, und/oder einer Referenzsignalempfangsqualität, RSRQ, und/oder einem Signal-Rausch-Verhältnis, SNR, und/oder einem Kanalqualitätsindikator, CQI, aufweist, die zweite voreingestellte Bedingung aufweist, dass die Anzahl des Auftretens eines Falls größer als ein zweiter voreingestellter Wert in einer voreingestellten Zeitperiode ist, wobei der Fall ist, dass ein Messergebnis der zweiten Metrik kleiner als ein entsprechender voreingestellter Schwellenwert ist,
wobei das mobile Endgerät ferner Folgendes aufweist:
ein Konfigurationsempfangsmodul, das eingerichtet ist, eine Konfiguration einer Strahlmeldung zu empfangen, die durch die netzseitige Vorrichtung gesendet wird; und
ein Strahlmeldungssendemodul, das eingerichtet ist, an die netzseitige Vorrichtung eine Strahlmeldung durch Strahltraining basierend auf der Konfiguration der Strahlmeldung zu senden, wobei die Strahlmeldung durch das Strahltraining für die netzseitige Vorrichtung verwendet wird, um eine optimale BPL zur Datenübertragung zu bestimmen, wobei die optimale BPL eine oder mehrere Ziel-BPLs aufweist, jede der Ziel-BPLs zumindest eine von einer Steuerkanal-BPL zur Steuerkanalübertragung oder einer Verkehrskanal-BPL zur Verkehrskanalübertragung aufweist, und alle der Ziel-BPLs zumindest eine der Steuerkanal-BPL und zumindest eine der Verkehrskanal-BPL aufweisen,
wobei die neue **BPL** Folgendes aufweist: eine neue Verkehrskanal-BPL, und das mobile Endgerät ferner ein Strahlmeldungsrückmeldungsmodul aufweist,
wobei das Anzeigenachricht-Empfangsmodul (1401) ferner eingerichtet ist, eine zweite Anzeigenachricht zu empfangen, die durch die netzseitige Vorrichtung gesendet wird, bevor die erste Anzeigenachricht empfangen wird, die durch die netzseitige Vorrichtung gesendet wird, wobei die zweite Anzeigenachricht verwendet wird, um anzuzeigen, ein lokales Strahltraining einzuleiten, und das lokale Strahltraining ein Durchführen eines schmalen Strahltrainings innerhalb einer optimalen Steuerkanal-BPL umfasst; und
das Strahlmeldungsrückmeldungsmodul eingerichtet ist, eine Strahlmeldung des schmalen Strahltrainings an die netzseitige Vorrichtung zurückzumelden, wobei die Strahlmeldung für die netzseitige Vorrichtung verwendet wird, um einen optimalen schmalen Strahl zu bestimmen und den optimalen schmalen Strahl als die neue Verkehrskanal-BPL einzustellen.

11. Mobiles Endgerät nach Anspruch 10, wobei die Anforderungsnachricht mindestens eines von einer ersten Signalisierung zum Anzeigen, den Strahlwiederherstellungsmechanismus einzuleiten, und/oder einer zweiten Signalisierung zum Anzeigen einer BPL, die für den Strahlwiederherstellungsmechanismus verwendet wird, trägt; oder
die Präambel zumindest eines der ersten Signalisierung oder der zweiten Signalisierung trägt.

12. Mobiles Endgerät nach Anspruch 11, wobei ein Bit in der ersten Signalisierung verwendet wird, um anzuzeigen, ob der Strahlwiederherstellungsmechanismus einzuleiten ist; und/oder
die voreingestellte Anzahl von Bits in der zweiten Signalisierung verwendet wird, um die **BPL** anzuzeigen, die für den Strahlwiederherstellungsmechanismus verwendet wird, der durch das mobile Endgerät überwacht und identifiziert wird; und/oder
die Anforderungsnachricht auf einem Uplink-Steuerkanal getragen wird oder unter Verwendung eines breiten Strahls gesendet wird oder unter Verwendung mehrerer schmaler Strahlen gleichzeitig gesendet wird.

13. Computerlesbares Speichermedium, wobei ein Computerprogramm darauf gespeichert ist und das Computerprogramm, wenn es durch einen Prozessor einer netzseitigen Vorrichtung ausgeführt wird, die netzseitige Vorrichtung veranlasst, Schritte des Verfahrens zur Strahlwiederherstellungsverarbeitung nach einem der Ansprüche 1 bis 3 durchzuführen, oder, wenn es durch einen Prozessor eines mobilen Endgeräts ausgeführt wird, das mobile Endgerät veranlasst, Schritte des Verfahrens zur Strahlwiederherstellungsverarbeitung nach einem der Ansprüche 4 bis 6 durchzuführen.

## Revendications

1. Procédé de traitement de récupération de faisceau, comprenant :
la transmission (101), par un dispositif côté réseau, d'un premier message d'indication à un terminal mobile en réponse au fait qu'une condition de déclenchement prédéfinie est satisfaite, dans lequel le premier message d'indication est utilisé pour indiquer une nouvelle liaison par paire de faisceaux, BPL, et la condition de déclenchement prédéfinie comprend le fait qu'un mécanisme de récupération de faisceau est déterminé comme étant initié par le terminal mobile sur la base d'un résultat de mesure d'un signal de référence de liaison descendante ; et
la commutation (102) vers la nouvelle BPL pour la transmission de données,
dans lequel : avant de transmettre (101), par le dispositif côté réseau, le premier message d'indication au terminal mobile, le procédé comprend en outre :
la réception (105) de données cibles qui sont transmises, au dispositif côté réseau, par le terminal mobile selon le résultat de mesure d'une seconde métrique du signal de référence de liaison descendante, dans le cas où la seconde métrique du signal de référence de liaison descendante satisfait à une seconde condition prédéfinie ; et
la détermination (106) du fait que la condition de déclenchement prédéfinie est ou non satisfaite sur la base des données cibles, dans lequel les données cibles sont un préambule d'accès aléatoire d'un canal d'accès aléatoire physique, PRACH, ou un message de demande transmis par le terminal mobile au dispositif côté réseau,
dans un cas où la seconde métrique comprend au moins l'un parmi une puissance de réception de signal de référence, RSRP, une qualité de réception de signal de référence, RSRQ, un rapport signal sur bruit, SNR, ou un indicateur de qualité de canal, CQI, la seconde condition prédéfinie comprend le fait que le nombre d'occurrences d'un cas est supérieur à une seconde valeur prédéfinie dans une période de temps prédéfinie, dans lequel le cas est le fait qu'un résultat de mesure de la seconde métrique est inférieur à une valeur seuil prédéfinie correspondante,
dans lequel avant de transmettre, par le dispositif côté réseau, le premier message d'indication au terminal mobile en réponse au fait que la condition de déclenchement prédéfinie est satisfaite, le procédé comprend en outre :
la transmission d'une configuration de rapport de faisceau au terminal mobile après une procédure d'accès aléatoire réussie ;
la réception d'un rapport de faisceau transmis par le terminal mobile par l'intermédiaire d'un entraînement de faisceau sur la base de la configuration du rapport de faisceau ; et
la détermination d'une BPL optimale pour la transmission de données sur la base du rapport de faisceau,
dans lequel la BPL optimale comprend une ou plusieurs BPL cibles, chacune des BPL cibles comprend au moins l'une parmi une BPL de canal de commande pour la transmission de canal de commande ou une BPL de canal de trafic pour la transmission de canal de trafic, et toutes les BPL cibles comprennent au moins une BPL de canal de commande et au moins une BPL de canal de trafic,
dans lequel l'indication de la nouvelle BPL comprend : l'indication d'une nouvelle BPL de canal de trafic, et avant de transmettre, par le dispositif côté réseau, le premier message d'indication au terminal mobile, le procédé comprend en outre :
la transmission (501) d'un second message d'indication au terminal mobile, dans lequel le second message d'indication est utilisé pour indiquer l'initiation d'un entraînement de faisceau local, et l'entraînement de faisceau local comprend la réalisation d'un entraînement de faisceau étroit dans une BPL de canal de commande optimale ;
la réception (502) d'un rapport de faisceau de l'entraînement de faisceau étroit renvoyé par le terminal mobile ; et
la détermination (503) d'un faisceau étroit optimal sur la base du rapport de faisceau, et la définition du faisceau étroit optimal comme nouvelle BPL de canal de trafic.

2. Procédé selon la revendication 1, dans lequel le message de demande contient au moins l'une parmi une première signalisation indiquant l'initiation du mécanisme de récupération de faisceau ou une seconde signalisation indiquant une BPL utilisée pour le mécanisme de récupération de faisceau ; ou
le préambule contient au moins l'une de la première signalisation ou de la seconde signalisation.

3. Procédé selon la revendication 2, dans lequel un bit dans la première signalisation est utilisé pour indiquer s'il faut initier le mécanisme de récupération de faisceau ; et/ou
le nombre prédéfini de bits dans la seconde signalisation est utilisé pour indiquer la BPL utilisée pour le mécanisme de récupération de faisceau qui est surveillé et identifié par le terminal mobile ; et/ou
le message de demande est transporté sur un canal de commande de liaison montante, ou transmis en utilisant un faisceau large, ou transmis en utilisant une pluralité de faisceaux étroits simultanément.

4. Procédé de traitement de récupération de faisceau, comprenant :
la réception (901), par un terminal mobile, d'un premier message d'indication transmis par un dispositif côté réseau, dans lequel le premier message d'indication est transmis, en réponse au fait qu'une condition de déclenchement prédéfinie est satisfaite, par le dispositif côté réseau au terminal mobile, le premier message d'indication est utilisé pour indiquer une nouvelle liaison par paire de faisceaux, BPL, et la condition de déclenchement prédéfinie comprend le fait qu'un mécanisme de récupération de faisceau est déterminé comme étant initié par le terminal mobile sur la base d'un résultat de mesure d'un signal de référence de liaison descendante ; et
la commutation (902) vers la nouvelle BPL selon le premier message d'indication pour la transmission de données,
dans lequel : avant de recevoir (901), par le terminal mobile, le premier message d'indication transmis par le dispositif côté réseau, le procédé comprend en outre :
la mesure (903) d'une seconde métrique du signal de référence de liaison descendante ; et
la transmission (904) de données cibles au dispositif côté réseau en fonction d'un résultat de mesure de la seconde métrique, dans le cas où la seconde métrique du signal de référence de liaison descendante satisfait à une seconde condition prédéfinie, dans lequel les données cibles sont configurées pour que le dispositif côté réseau détermine si la condition de déclenchement prédéfinie est satisfaite, dans lequel les données cibles sont un préambule d'accès aléatoire d'un canal d'accès aléatoire physique, PRACH, ou un message de demande transmis par le terminal mobile au dispositif côté réseau,
dans un cas où la seconde métrique comprend au moins l'un parmi une puissance de réception de signal de référence, RSRP, une qualité de réception de signal de référence, RSRQ, un rapport signal sur bruit, SNR, ou un indicateur de qualité de canal, CQI, la seconde condition prédéfinie comprend le fait que le nombre d'occurrences d'un cas est supérieur à une seconde valeur prédéfinie dans une période de temps prédéfinie, dans lequel le cas est le fait qu'un résultat de mesure de la seconde métrique est inférieur à une valeur seuil prédéfinie correspondante,
dans lequel avant de recevoir, par le terminal mobile, le premier message d'indication transmis par le dispositif côté réseau, le procédé comprend en outre :
la réception d'une configuration de rapport de faisceau transmise par le dispositif côté réseau ; et
la transmission, au dispositif côté réseau, d'un rapport de faisceau par l'intermédiaire d'un entraînement de faisceau sur la base de la configuration du rapport de faisceau, dans lequel le rapport de faisceau par l'intermédiaire d'un entraînement de faisceau est utilisé pour que le dispositif côté réseau détermine une BPL optimale pour la transmission de données,
dans lequel la BPL optimale comprend une ou plusieurs BPL cibles, chacune des BPL cibles comprend au moins l'une parmi une BPL de canal de commande pour la transmission de canal de commande ou une BPL de canal de trafic pour la transmission de canal de trafic, et toutes les BPL cibles comprennent au moins une BPL de canal de commande et au moins une BPL de canal de trafic,
dans lequel l'indication de la nouvelle BPL comprend : l'indication d'une nouvelle BPL de canal de trafic, et avant de recevoir, par le terminal mobile, le premier message d'indication transmis par le dispositif côté réseau, le procédé comprend en outre :
la réception d'un second message d'indication transmis par le dispositif côté réseau, dans lequel le second message d'indication est utilisé pour indiquer l'initiation d'un entraînement de faisceau local, et l'entraînement de faisceau local comprend la réalisation d'un entraînement de faisceau étroit dans une BPL de canal de commande optimale ; et
le renvoi d'un rapport de faisceau de l'entraînement de faisceau étroit au dispositif côté réseau, dans lequel le rapport de faisceau est configuré pour que le dispositif côté réseau détermine un faisceau étroit optimal et définisse le faisceau étroit optimal comme nouvelle BPL de canal de trafic.

5. Procédé selon la revendication 4, dans lequel le message de demande contient au moins l'une parmi une première signalisation indiquant l'initiation du mécanisme de récupération de faisceau ou une seconde signalisation indiquant une BPL utilisée pour le mécanisme de récupération de faisceau ; ou
le préambule contient au moins l'une de la première signalisation ou de la seconde signalisation.

6. Procédé selon la revendication 5, dans lequel un bit dans la première signalisation est utilisé pour indiquer s'il faut initier le mécanisme de récupération de faisceau ; et/ou
le nombre prédéfini de bits dans la seconde signalisation est utilisé pour indiquer la BPL utilisée pour le mécanisme de récupération de faisceau qui est surveillé et identifié par le terminal mobile ; et/ou
le message de demande est transporté sur un canal de commande de liaison montante, ou transmis en utilisant un faisceau large, ou transmis en utilisant une pluralité de faisceaux étroits simultanément.

7. Dispositif côté réseau, comprenant :
un module de transmission de message d'indication (1301), configuré pour transmettre un premier message d'indication à un terminal mobile en réponse au fait qu'une condition de déclenchement prédéfinie est satisfaite, dans lequel le premier message d'indication est utilisé pour indiquer une nouvelle liaison par paire de faisceaux, BPL, et la condition de déclenchement prédéfinie comprend le fait qu'un mécanisme de récupération de faisceau est déterminé comme étant initié par le terminal mobile sur la base d'un résultat de mesure d'un signal de référence de liaison descendante ; et
un premier module de commutation de communication (1302), configuré pour commuter vers la nouvelle BPL pour la transmission de données,
dans lequel : le dispositif côté réseau comprend en outre :
un module de réception de données cibles, configuré pour recevoir des données cibles qui sont transmises, au dispositif côté réseau, par le terminal mobile selon le résultat de mesure d'une seconde métrique du signal de référence de liaison descendante, dans le cas où la seconde métrique du signal de référence de liaison descendante satisfait à une seconde condition prédéfinie ; et
un deuxième module de détermination, configuré pour déterminer si la condition de déclenchement prédéfinie est satisfaite sur la base des données cibles, dans lequel les données cibles sont un préambule d'accès aléatoire d'un canal d'accès aléatoire physique, PRACH, ou un message de demande transmis par le terminal mobile au dispositif côté réseau ;
dans un cas où la seconde métrique comprend au moins l'un parmi une puissance de réception de signal de référence, RSRP, une qualité de réception de signal de référence, RSRQ, un rapport signal sur bruit, SNR, ou un indicateur de qualité de canal, CQI, la seconde condition prédéfinie comprend le fait que le nombre d'occurrences d'un cas est supérieur à une seconde valeur prédéfinie dans une période de temps prédéfinie, dans lequel le cas est le fait qu'un résultat de mesure de la seconde métrique est inférieur à une valeur seuil prédéfinie correspondante,
dans lequel le dispositif côté réseau comprend en outre :
un module de transmission de configuration, configuré pour transmettre une configuration de rapport de faisceau à un terminal mobile après une procédure d'accès aléatoire réussie ;
un module de réception de rapport de faisceau, configuré pour recevoir un rapport de faisceau transmis par le terminal mobile par l'intermédiaire d'un entraînement de faisceau sur la base de la configuration du rapport de faisceau ; et
un troisième module de détermination, configuré pour déterminer une BPL optimale pour la transmission de données sur la base du rapport de faisceau,
dans lequel la BPL optimale comprend une ou plusieurs BPL cibles, chacune des BPL cibles comprend au moins l'une parmi une BPL de canal de commande pour la transmission de canal de commande ou une BPL de canal de trafic pour la transmission de canal de trafic, et toutes les BPL cibles comprennent au moins une BPL de canal de commande et au moins une BPL de canal de trafic,
dans lequel la nouvelle BPL comprend : une nouvelle BPL de canal de trafic, et le dispositif côté réseau comprend en outre un module de traitement,
dans lequel le module de transmission de message d'indication (1301) est configuré pour transmettre un second message d'indication au terminal mobile avant de transmettre le premier message d'indication au terminal mobile, dans lequel le second message d'indication est utilisé pour indiquer le lancement d'un entraînement de faisceau local, et l'entraînement de faisceau local comprend la réalisation d'un entraînement de faisceau étroit dans une BPL de canal de commande optimale ;
le module de réception de rapport de faisceau est configuré pour recevoir un rapport de faisceau de l'entraînement de faisceau étroit renvoyé par le terminal mobile ; et
le module de traitement est configuré pour déterminer un faisceau étroit optimal sur la base du rapport de faisceau et définir le faisceau étroit optimal comme nouvelle BPL de canal de trafic.

8. Dispositif côté réseau selon la revendication 7, dans lequel le message de demande contient au moins l'une parmi une première signalisation indiquant l'initiation du mécanisme de récupération de faisceau ou une seconde signalisation indiquant une BPL utilisée pour le mécanisme de récupération de faisceau ; ou
le préambule contient au moins l'une de la première signalisation ou de la seconde signalisation.

9. Dispositif côté réseau selon la revendication 8, dans lequel un bit dans la première signalisation est utilisé pour indiquer s'il faut initier le mécanisme de récupération de faisceau ; et/ou
le nombre prédéfini de bits dans la seconde signalisation est utilisé pour indiquer la BPL utilisée pour le mécanisme de récupération de faisceau qui est surveillé et identifié par le terminal mobile ; et/ou
le message de demande est transporté sur un canal de commande de liaison montante, ou transmis en utilisant un faisceau large, ou transmis en utilisant une pluralité de faisceaux étroits simultanément.

10. Terminal mobile, comprenant :
un module de réception de message d'indication (1401), configuré pour recevoir un premier message d'indication transmis par un dispositif côté réseau, dans lequel le premier message d'indication est transmis, en réponse au fait qu'une condition de déclenchement prédéfinie est satisfaite, par le dispositif côté réseau au terminal mobile, le premier message d'indication est utilisé pour indiquer une nouvelle liaison par paire de faisceaux, BPL, et la condition de déclenchement prédéfinie comprend le fait qu'un mécanisme de récupération de faisceau est déterminé comme étant initié par le terminal mobile sur la base d'un résultat de mesure d'un signal de référence de liaison descendante ; et
un second module de commutation de communication (1402), configuré pour commuter vers la nouvelle BPL en fonction du premier message d'indication pour la transmission de données,
dans lequel : le terminal mobile comprend en outre :
un second module de mesure, configuré pour mesurer une seconde métrique du signal de référence de liaison descendante ; et
un module de transmission de données cibles, configuré pour transmettre des données cibles au dispositif côté réseau en fonction d'un résultat de mesure de la seconde métrique, dans le cas où la seconde métrique du signal de référence de liaison descendante satisfait à une seconde condition prédéfinie, dans lequel les données cibles sont configurées pour que le dispositif côté réseau détermine si la condition de déclenchement prédéfinie est satisfaite, dans lequel les données cibles sont un préambule d'accès aléatoire d'un canal d'accès aléatoire physique, PRACH, ou un message de demande transmis par le terminal mobile au dispositif côté réseau,
dans un cas où la seconde métrique comprend au moins l'un parmi une puissance de réception de signal de référence, RSRP, une qualité de réception de signal de référence, RSRQ, un rapport signal sur bruit, SNR, ou un indicateur de qualité de canal, CQI, la seconde condition prédéfinie comprend le fait que le nombre d'occurrences d'un cas est supérieur à une seconde valeur prédéfinie dans une période de temps prédéfinie, dans lequel le cas est le fait qu'un résultat de mesure de la seconde métrique est inférieur à une valeur seuil prédéfinie correspondante,
dans lequel le terminal mobile comprend en outre :
un module de réception de configuration, configuré pour recevoir une configuration de rapport de faisceau transmise par le dispositif côté réseau ; et
un module de transmission de rapport de faisceau, configuré pour transmettre, au dispositif côté réseau, un rapport de faisceau par l'intermédiaire d'un entraînement de faisceau sur la base de la configuration du rapport de faisceau, dans lequel le rapport de faisceau par l'intermédiaire d'un entraînement de faisceau est utilisé pour que le dispositif côté réseau détermine une BPL optimale pour la transmission de données, dans lequel la BPL optimale comprend une ou plusieurs BPL cibles, chacune des BPL cibles comprend au moins l'une parmi une BPL de canal de commande pour la transmission de canal de commande ou une BPL de canal de trafic pour la transmission de canal de trafic, et toutes les BPL cibles comprennent au moins une BPL de canal de commande et au moins une BPL de canal de trafic, dans lequel la nouvelle BPL comprend : une nouvelle BPL de canal de trafic, et le terminal mobile comprend en outre un module de rétroaction de rapport de faisceau,
dans lequel le module de réception de message d'indication (1401) est en outre configuré pour recevoir un second message d'indication transmis par le dispositif côté réseau avant de recevoir le premier message d'indication transmis par le dispositif côté réseau, dans lequel le second message d'indication est utilisé pour indiquer le lancement de l'entraînement de faisceau local, et l'entraînement de faisceau local comprend l'exécution d'un entraînement de faisceau étroit dans une BPL de canal de commande optimale ; et
le module de renvoi de rapport de faisceau est configuré pour renvoyer un rapport de faisceau de l'entraînement de faisceau étroit au dispositif côté réseau, dans lequel le rapport de faisceau est utilisé pour que le dispositif côté réseau détermine un faisceau étroit optimal et définisse le faisceau étroit optimal comme nouvelle BPL de canal de trafic.

11. Terminal mobile selon la revendication 10, dans lequel le message de demande contient au moins l'une parmi une première signalisation indiquant l'initiation du mécanisme de récupération de faisceau ou une seconde signalisation indiquant une BPL utilisée pour le mécanisme de récupération de faisceau ; ou
le préambule contient au moins l'une de la première signalisation ou de la seconde signalisation.

12. Terminal mobile selon la revendication 11, dans lequel un bit dans la première signalisation est utilisé pour indiquer s'il faut initier le mécanisme de récupération de faisceau ; et/ou
le nombre prédéfini de bits dans la seconde signalisation est utilisé pour indiquer la BPL utilisée pour le mécanisme de récupération de faisceau qui est surveillé et identifié par le terminal mobile ; et/ou
le message de demande est transporté sur un canal de commande de liaison montante, ou transmis en utilisant un faisceau large, ou transmis en utilisant une pluralité de faisceaux étroits simultanément.

13. Support de stockage lisible par ordinateur, dans lequel un programme informatique est stocké, et le programme informatique, lorsqu'il est exécuté par un processeur d'un dispositif côté réseau, amène le dispositif côté réseau à exécuter les étapes du procédé de traitement de récupération de faisceau selon l'une quelconque des revendications 1 à 3, ou lorsqu'il est exécuté par un processeur d'un terminal mobile, amène le terminal mobile à exécuter les étapes du procédé de traitement de récupération de faisceau selon l'une quelconque des revendications 4 à 6.
